(19) **Europäisches Patentamt / European Patent Office / Office européen des brevets**

(11) **EP 4 580 251 A1**

(12) **EUROPEAN PATENT APPLICATION**
published in accordance with Art. 153(4) EPC

(43) Date of publication:
**02.07.2025 Bulletin 2025/27**

(21) Application number: **23867283.6**

(22) Date of filing: **05.09.2023**

(51) International Patent Classification (IPC):
**H04W 36/00** (2009.01)

(52) Cooperative Patent Classification (CPC):
**H04W 36/00; H04W 56/00; H04W 74/0833**

(86) International application number:
**PCT/CN2023/117087**

(87) International publication number:
**WO 2024/060992 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.09.2022 CN 202211163296**

(71) Applicant: **Huawei Technologies Co., Ltd.**
**Shenzhen, Guangdong 518129 (CN)**

(72) Inventors:
• **FAN, Qiang**
**Shenzhen, Guangdong 518129 (CN)**

• **HUANG, Zonghao**
**Shenzhen, Guangdong 518129 (CN)**
• **YOU, Chunhua**
**Shenzhen, Guangdong 518129 (CN)**
• **GU, Zhifang**
**Shenzhen, Guangdong 518129 (CN)**
• **HU, Xiaoqun**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD, COMMUNICATION APPARATUS AND COMMUNICATION SYSTEM**

(57) Embodiments of this application provide a communication method, a communication apparatus, and a communication system. The communication method includes: A second communication apparatus determines first time information, where the first time information is obtained through calculation based on a first transmission delay and a second transmission delay, the first transmission delay is a transmission delay from a first communication apparatus to the second communication apparatus, the second transmission delay is a transmission delay from the first communication apparatus to a third communication apparatus, the second communication apparatus is a communication apparatus corresponding to a first cell, and the third communication apparatus is a communication apparatus corresponding to a second cell; the second communication apparatus sends a first message, and correspondingly, the first communication receives the first message; and the first communication apparatus determines a first timing advance TA value of the second cell based on the first time information. According to embodiments of this application, service interruption caused by obtaining a TA value in a random access process can be avoided.

FIG. 5

**Description**

This application claims priority to Chinese Patent Application No. 202211163296.X, filed with the China National Intellectual Property Administration on September 23, 2022 and entitled "COMMUNICATION METHOD, COMMUNICATION APPARATUS, AND COMMUNICATION SYSTEM", which is incorporated herein by reference in its entirety.

## TECHNICAL FIELD

This application relates to the field of communication technologies, and in particular, to a communication method, a communication apparatus, and a communication system.

## BACKGROUND

In a mobile communication system, a terminal device may switch between different network devices. In a process in which the terminal device switches from a source network device to a target network device, after disconnecting from the source network device, the terminal device may access the target network device in a random access manner, to establish a connection to the target network device for data communication.

Generally, the terminal device may perform uplink timing synchronization with the target network device in a random access process. For example, the terminal device may send a random access preamble to the target network device. The target network device calibrates an uplink timing advance (timing advance, TA) value based on the random access preamble, and sends the TA value to the terminal device via a timing advance command. The terminal device performs uplink data transmission with the target network device based on the TA value, to implement the uplink timing synchronization between the terminal device and the target network device.

However, in a manner in which the terminal device obtains the TA value through random access, it takes long time for the terminal device to disconnect from the source network device and then establish the connection to the target network device, resulting in service interruption of the terminal device for long time.

## SUMMARY

Embodiments of this application disclose a communication method, a communication apparatus, and a communication system, to avoid service interruption caused by obtaining a TA value in a random access process.

According to a first aspect, an embodiment of this application provides a communication method. The method may be performed by a first communication apparatus, or may be performed by a component (for example, a chip or a circuit) of the first communication apparatus. This is not limited herein. The method includes:

The first communication apparatus receives a first message from a second communication apparatus, where the first message includes first time information, the first time information is determined based on a first transmission delay and a second transmission delay, the first transmission delay is a transmission delay from the first communication apparatus to the second communication apparatus, the second transmission delay is a transmission delay from the first communication apparatus to a third communication apparatus, the second communication apparatus is a communication apparatus corresponding to a first cell, and the third communication apparatus is a communication apparatus corresponding to a second cell; the first communication apparatus determines a first timing advance TA value of the second cell based on the first time information; and the first communication apparatus sends uplink data to the third communication apparatus based on the first TA value.

In this embodiment of this application, the first cell may be a source cell on which the first communication apparatus camps, and the second cell may be a target cell to which the first communication apparatus is to switch. The first TA value indicates an occasion at which the first communication apparatus sends the uplink data to the third communication apparatus. The second communication apparatus may determine the first time information based on the first transmission delay and the second transmission delay, and indicate the first TA value of the second cell by including the first time information in the first message. The first communication apparatus may determine the first TA value based on the first time information, and does not need to determine the TA value of the second cell in a random access process, to avoid service interruption caused by obtaining the TA value of the second cell in the random access process, and reduce interruption duration of the first communication apparatus in a process of in which the first communication apparatus switches from the second communication apparatus to the third communication apparatus.

In a possible implementation, the first time information indicates the first TA value, the first TA value is determined based on a second TA value and a first time difference, the second TA value is a TA value of the first cell or a TA value of a first timing advance group (timing advance group, TAG) of the first communication apparatus, and the first time difference is a difference between the first transmission delay and the second transmission delay.

In this embodiment of this application, the second TA value is a TA value used when the first communication

EP 4 580 251 A1

apparatus performs uplink data transmission with the second communication apparatus. That the first time information indicates the first TA value may be specifically that the first time information includes the first TA value or includes information used to determine the first TA value, for example, the first time difference. When the first time information includes the first TA value, the first TA value may be obtained by the second communication apparatus through calculation based on the second TA value and the first time difference and then sent to the first communication apparatus via the first message, and the first communication apparatus may directly obtain the first TA value from the first time information. When the first time information includes the information used to determine the first TA value, the first communication apparatus may obtain the first TA value through calculation based on the second TA value and the first time difference. The first TA value is obtained through calculation based on the second TA value and the first time difference, so that the obtained first TA value can more accurately indicate the occasion at which the first communication apparatus sends the uplink data.

In a possible implementation, the first communication apparatus determining the first timing advance TA value of the first cell based on the first time information includes:

The first communication apparatus determines the first TA value based on the first time information and a second TA value, where the second TA value is a TA value of the first cell or a TA value of a first TAG of the first communication apparatus.

In this embodiment of this application, the second TA value is a TA value used when the first communication apparatus performs uplink data transmission with the second communication apparatus. The first communication apparatus may obtain the first TA value through calculation based on the first time information and the second TA value, so that accuracy of the obtained first TA value is higher.

In a possible implementation, the first message further includes first indication information, and the first indication information indicates the first TAG.

In a possible implementation, the first time information includes a first time difference, the first time difference is a difference between the first transmission delay and the second transmission delay, and the first communication apparatus determining the first TA value based on the first time information and the second TA value includes:

The first communication apparatus determines the first TA value based on the first time difference and the second TA value.

In this embodiment of this application, the first time difference may alternatively be understood as a difference between time at which a first reference signal sent by the first communication apparatus is transmitted to the second communication apparatus and time at which the first reference signal is transmitted to the third communication apparatus, and the first TA value may be understood as a round-trip transmission delay from the first communication apparatus to the third communication apparatus. The first TA value is determined based on the second TA value and the difference between the first transmission delay and the second transmission delay, so that accuracy of the obtained first TA value may be higher.

In a possible implementation, the first time information further includes a first downlink timing offset, the first downlink timing offset is a downlink timing offset between the first cell and the second cell, and the first communication apparatus determining the first TA value based on the first time difference and the second TA value includes:

The first communication apparatus determines the first TA value based on the first time difference, the second TA value, and the first downlink timing offset.

In this embodiment of this application, the first downlink timing offset may be understood as a difference between subframe boundaries that are closest in time domain and that are of the first cell and the second cell. When downlink timing of the first cell is not synchronized with downlink timing of the second cell, the first TA value is further related to the first downlink timing offset. The first communication apparatus obtains the first TA value through calculation based on the first time difference, the first downlink timing offset, and the second TA value, so that accuracy of the obtained first TA value may be higher.

In a possible implementation, the first TA value satisfies: TA1=TA2-2*(UL_TDOA-△), where TA1 is the first TA value, TA2 is the second TA value, UL_TDOA is the first time difference, and △ is the first downlink timing offset.

In a possible implementation, the method further includes:

The first communication apparatus determines downlink frame timing of the second cell based on the first time difference and the first downlink frame timing, where the first downlink frame timing is downlink frame timing of the first cell or downlink frame timing of the first TAG.

In this embodiment of this application, the downlink frame timing of the second cell indicates an occasion at which the first communication apparatus receives downlink data sent by the third communication apparatus, and the first downlink frame timing indicates an occasion at which the first communication apparatus receives downlink data sent by the second communication apparatus. The first communication apparatus may determine the downlink frame timing of the second cell based on the first time difference and the first downlink frame timing, so that the first communication apparatus can perform downlink data transmission with the third communication apparatus based on the downlink frame timing of the second cell, to implement downlink timing synchronization between the first communication apparatus and the third communication apparatus.

In a possible implementation, the downlink frame timing of the second cell is obtained by adjusting the first downlink frame timing forward or backward by the first time difference.

3

In a possible implementation, the first time information includes a second time difference, the second time difference is a difference between a round-trip transmission delay from the first communication apparatus to the second communication apparatus and a round-trip transmission delay from the first communication apparatus to the third communication apparatus, and the first communication apparatus determining the first TA value based on the first time information and the second TA value includes:

The first communication apparatus determines the first TA value based on the second time difference and the second TA value.

In this embodiment of this application, the first TA value may be understood as the round-trip transmission delay from the first communication apparatus to the third communication apparatus, and the second TA value may be understood as the round-trip transmission delay from the first communication apparatus to the second communication apparatus. The first communication apparatus obtains the first TA value through calculation based on the second time difference and the second TA value, so that accuracy of the obtained first TA value may be higher.

In a possible implementation, the second time difference is determined based on a first time difference and a first downlink timing offset, the first time difference is a difference between the first transmission delay and the second transmission delay, and the first downlink timing offset is a downlink timing offset between the first cell and the second cell.

In this embodiment of this application, when downlink timing of the first cell is not synchronized with downlink timing of the second cell, the second time difference is related to the first downlink timing offset. The second communication apparatus may obtain the second time difference through calculation based on the first time difference and the first downlink timing offset, so that accuracy of the obtained second time difference is higher.

In a possible implementation, the first TA value satisfies: TA1=TA2-TA_offset, where TA1 is the first TA value, TA2 is the second TA value, and TA_offset is the second time difference.

According to a second aspect, an embodiment of this application provides a communication method. The method may be performed by a second communication apparatus, or may be performed by a component (for example, a chip or a circuit) of the second communication apparatus. This is not limited herein. The method includes:

The second communication apparatus determines first time information, where the first time information is determined based on a first transmission delay and a second transmission delay, the first transmission delay is a transmission delay from a first communication apparatus to the second communication apparatus, the second transmission delay is a transmission delay from the first communication apparatus to a third communication apparatus, the second communication apparatus is a communication apparatus corresponding to a first cell, and the third communication apparatus is a communication apparatus corresponding to a second cell; and the second communication apparatus sends a first message to the first communication apparatus, where the first message includes the first time information.

In this embodiment of this application, the first time information indicates a TA value of the second cell. The second communication apparatus may determine the first time information based on the first transmission delay and the second transmission delay, and send the first time information to the first communication apparatus via the first message, so that the first communication apparatus can determine the first TA value based on the first time information, to avoid service interruption caused by obtaining the first TA value by the first communication apparatus in a random access process.

In a possible implementation, the first time information indicates a first TA value, the first TA value is determined based on a second TA value and a first time difference, the first TA value is a TA value of the second cell, the second TA value is a TA value of the first cell or a TA value of a first timing advance group TAG of the first communication apparatus, and the first time difference is a difference between the first transmission delay and the second transmission delay.

In this embodiment of this application, the second TA value is a TA value used when the first communication apparatus performs uplink data transmission with the second communication apparatus. That the first time information indicates the first TA value may be specifically that the first time information includes the first TA value or includes information used to determine the first TA value, for example, the first time difference. When the first time information includes the first TA value, the first TA value may be obtained by the second communication apparatus through calculation based on the second TA value and the first time difference and then sent to the first communication apparatus via the first message, and the first communication apparatus may directly obtain the first TA value from the first time information. When the first time information includes the information used to determine the first TA value, the first communication apparatus may obtain the first TA value through calculation based on the second TA value and the first time difference. The first TA value is obtained through calculation based on the second TA value and the first time difference, so that the obtained first TA value can more accurately indicate the occasion at which the first communication apparatus sends the uplink data.

In a possible implementation, the first time information includes a first time difference, and the first time difference is a difference between the first transmission delay and the second transmission delay.

In this embodiment of this application, the second communication apparatus may send the first time difference to the first communication apparatus via the first time information, so that the first communication apparatus can determine the first TA value based on the first time difference.

In a possible implementation, the first time information further includes a first downlink timing offset, and the first downlink timing offset is a downlink timing offset between the first cell and the second cell.

In this embodiment of this application, the second communication apparatus may send the first time difference and the first downlink timing offset to the first communication apparatus via the first time information, so that the first communication apparatus can obtain the first TA value through calculation based on the first time difference and the first downlink timing offset.

In a possible implementation, the first time information includes a second time difference, the second time difference is a difference between a round-trip transmission delay from the first communication apparatus to the second communication apparatus and a round-trip transmission delay from the first communication apparatus to the third communication apparatus, the second time difference is determined based on a first time difference, and the first time difference is a difference between the first transmission delay and the second transmission delay.

In this embodiment of this application, the second communication apparatus may send the second time difference to the first communication apparatus via the first time information, so that the first communication apparatus can determine the first TA value based on the second time difference.

In a possible implementation, the second time difference is determined based on the first time difference and a first downlink timing offset, and the first downlink timing offset is a downlink timing offset between the first cell and the second cell.

In this embodiment of this application, when downlink timing of the first cell is not synchronized with downlink timing of the second cell, the second time difference is related to the first downlink timing offset. The second communication apparatus may determine the second time difference based on the first time difference and the first downlink timing offset, so that accuracy of the obtained second time difference may be higher.

In a possible implementation, the method further includes:
The second communication apparatus receives a second message from a fourth communication apparatus, where the second message indicates the first time information.

The second communication apparatus determining the first time information includes:
The second communication apparatus determines the first time information based on the second message.

In this embodiment of this application, the second message may include one or more of the first time difference, the first downlink timing offset, first downlink timing, and first receiving time. The second communication apparatus may be a distributed unit, and the fourth communication apparatus may be a central unit corresponding to the second communication apparatus. The second communication apparatus may determine the first time information based on the second message, so that the first communication apparatus can determine the first TA value based on the first time information, to avoid service interruption caused by obtaining the first TA value in a random access process.

In a possible implementation, the second message includes the first downlink timing offset, and the second communication apparatus determining the first time information based on the second message includes:
The second communication apparatus determines the first time information based on the first downlink timing offset.

In this embodiment of this application, the second communication apparatus may obtain the first downlink timing offset through interaction with the fourth communication apparatus, and determine the first time information based on the first downlink timing offset, so that the first time information can indicate the first TA value, and the first communication apparatus can determine the first TA value based on the first time information, to avoid service interruption caused by obtaining the first TA value in a random access process.

In a possible implementation, the method further includes:
The second communication apparatus sends a fourth message to the fourth communication apparatus, where the fourth message includes second downlink timing, and the second downlink timing is downlink timing of the first cell.

In this embodiment of this application, the second communication apparatus may report the downlink timing of the first cell to the fourth communication apparatus, so that the fourth communication apparatus can determine the first downlink timing offset based on the downlink timing of the first cell.

In a possible implementation, the second message includes first downlink timing, the first downlink timing is downlink timing of the second cell, and the method further includes:
The second communication apparatus determines the first downlink timing offset based on the first downlink timing and second downlink timing, where the second downlink timing is downlink timing of the first cell.

The second communication apparatus determining the first time information based on the second message includes:
The second communication apparatus determines the first time information based on the first downlink timing offset.

In this embodiment of this application, the second communication apparatus may obtain the downlink timing of the second cell through interaction with the fourth communication apparatus, determine the first downlink timing offset based on the downlink timing of the first cell and the downlink timing of the second cell, and determine the first time information based on the first downlink timing offset, so that the first time information can indicate the first TA value, and the first communication apparatus can determine the first TA value based on the first time information, to avoid service interruption caused by obtaining the first TA value in a random access process.

In a possible implementation, the first downlink timing includes time corresponding to a radio frame, time corresponding to a subframe, or time corresponding to a slot.

In a possible implementation, the second message includes the first time difference, and the second communication apparatus determining the first time information based on the second message includes:

The second communication apparatus determines the first time information based on the first time difference.

In this embodiment of this application, the second communication apparatus may obtain the first time difference through interaction with the fourth communication apparatus, and determine the first time information based on the first time difference, so that the first time information can indicate the first TA value, and the first communication apparatus can determine the first TA value based on the first time information, to avoid service interruption caused by obtaining the first TA value in a random access process.

In a possible implementation, the method further includes:

The second communication apparatus receives a first reference signal from the first communication apparatus; and the second communication apparatus sends a third message to the fourth communication apparatus, where the third message includes second receiving time, and the second receiving time is time at which the second communication apparatus receives the first reference signal.

In this embodiment of this application, the second receiving time is the time at which the second communication apparatus receives the first reference signal, that is, the second receiving time is time at which the first reference signal is transmitted to the second communication apparatus. The second communication apparatus may record the second receiving time after receiving the first reference signal sent by the first communication apparatus, and send the second receiving time to the fourth communication apparatus via the third message, so that the fourth communication apparatus can determine the first time difference based on the second receiving time.

In a possible implementation, the second message includes first receiving time, the first receiving time is time at which a first reference signal of the first communication apparatus is transmitted to the third communication apparatus, and the method further includes:

The second communication apparatus determines the first time difference based on the first receiving time and second receiving time, where the second receiving time is time at which the second communication apparatus receives the first reference signal.

The second communication apparatus determining the first time information based on the second message includes:

The second communication apparatus determines the first time information based on the first time difference.

In this embodiment of this application, the first receiving time is the time at which the first reference signal is transmitted to the third communication apparatus, that is, the first receiving time is time at which the third communication apparatus receives the first reference signal. The second communication apparatus may obtain the first receiving time through interaction with the fourth communication apparatus, determine the first time difference based on the first receiving time and the second receiving time, and can further determine the first time information based on the first time difference, so that the first time information can indicate the first TA value, and the first communication apparatus can determine the first TA value based on the first time information, to avoid service interruption caused by obtaining the first TA value in a random access process.

In a possible implementation, the method further includes:

The second communication apparatus sends a first request message to the fourth communication apparatus, where the first request message is used to request to obtain the second message.

According to a third aspect, an embodiment of this application provides a communication method. The method may be performed by a fourth communication apparatus, or may be performed by a component (for example, a chip or a circuit) of the fourth communication apparatus. This is not limited herein. The method includes:

The fourth communication apparatus receives a fifth message from a third communication apparatus, where the fifth message includes first receiving time or first downlink timing, the first receiving time is time at which the third communication apparatus receives a first reference signal sent by a first communication apparatus, the first downlink timing is downlink timing of a second cell, and the third communication apparatus is a communication apparatus corresponding to a second cell; the fourth communication apparatus sends a second message to a second communication apparatus based on the first receiving time or the first downlink timing, where the second message indicates first time information, the first time information is determined based on a first transmission delay and a second transmission delay, the first transmission delay is a transmission delay from the first communication apparatus to the second communication apparatus, the second transmission delay is a transmission delay from the first communication apparatus to the third communication apparatus, and the second communication apparatus is a communication apparatus corresponding to a first cell.

In this embodiment of this application, the fourth communication apparatus may obtain the first receiving time or the first downlink timing through interaction with the third communication apparatus, and send the second message based on the first downlink timing and the first receiving time, so that the second communication apparatus can determine the first time information based on the second message.

In a possible implementation, the fifth message includes the first receiving time, the second message includes a first time difference, the first time difference is a difference between the first transmission delay and the second transmission delay, and the method further includes:

The fourth communication apparatus receives a third message from the second communication apparatus, where the third message includes second receiving time, and the second receiving time is time at which the second communication apparatus receives the first reference signal; and the fourth communication apparatus determines the first time difference based on the first receiving time and the second receiving time.

In this embodiment of this application, the first time difference may be a difference between the first receiving time and the second receiving time. The fourth communication apparatus determines the first time difference based on the first receiving time and the second receiving time, and sends the first time difference to the second communication apparatus via the second message, so that the second communication apparatus can determine the first time information based on the first time difference.

In a possible implementation, the fifth message includes the first downlink timing, the second message includes a first downlink timing offset, the first downlink timing offset is a downlink timing offset between the first cell and the second cell, and the method further includes:

The fourth communication apparatus receives a fourth message from the second communication apparatus, where the fourth message includes second downlink timing, and the second downlink timing is downlink timing of the first cell; and the fourth communication apparatus determines the first downlink timing offset based on the first downlink timing and the second downlink timing.

In this embodiment of this application, the fourth communication apparatus determines the first downlink timing offset based on the first downlink timing and the second downlink timing, and sends the first downlink timing offset to the second communication apparatus via the second message, so that the second communication apparatus can determine the first time information based on the first downlink timing offset.

In a possible implementation, the second message includes the first receiving time or the first downlink timing.

In this embodiment of this application, the fourth communication apparatus may send the first receiving time or the first downlink timing to the second communication apparatus via the second message, so that the second communication apparatus can determine the first time information based on the first receiving time or the first downlink timing.

In a possible implementation, the method further includes:

The fourth communication apparatus receives a first request message from the second communication apparatus, where the first request message is used to request to obtain the second message.

In this embodiment of this application, the second message may include one or more of the first time difference, the first downlink timing offset, the first downlink timing, and the first receiving time, and the first request message is used to request one or more of the first time difference, the first downlink timing offset, the first downlink timing, and the first receiving time. When receiving the first request message, the fourth communication apparatus may send corresponding information to the second communication apparatus via the second message, so that the second communication apparatus can determine the first time information based on the second message. Alternatively, the second communication apparatus indicates, via the first request message, an occasion at which the fourth communication apparatus sends the second message, to improve interaction efficiency between the second communication apparatus and the fourth communication apparatus.

In a possible implementation, the method further includes:

The fourth communication apparatus sends a second request message to the third communication apparatus, where the second request message is used to request to obtain the first receiving time or the first downlink timing.

In this embodiment of this application, the fourth communication apparatus may send the second request message to the third communication apparatus, to obtain the first receiving time or the first downlink timing, so that the fourth communication apparatus can determine the second message based on the first receiving time or the first downlink timing.

According to a fourth aspect, an embodiment of this application provides a communication method. The method may be performed by a third communication apparatus, or may be performed by a component (for example, a chip or a circuit) of the third communication apparatus. This is not limited herein. The method includes:

The third communication apparatus receives a second request message from a fourth communication apparatus, where the second request message is used to request first receiving time or first downlink timing, the first receiving time is time at which the third communication apparatus receives a first reference signal from a first communication apparatus, the first downlink timing is downlink timing of a second cell, and the third communication apparatus is a communication apparatus corresponding to the second cell; and the third communication apparatus sends a fifth message to the fourth communication apparatus, where the fifth message includes the first receiving time or the first downlink timing.

In this embodiment of this application, the third communication apparatus may send the first receiving time or the first downlink timing to the fourth communication apparatus via the fifth message, so that the fourth communication apparatus can send a second message based on the first receiving time or the first downlink timing, where the second message indicates first time information.

In a possible implementation, the method further includes:

The third communication apparatus receives the first reference signal.

In this embodiment of this application, the third communication apparatus may receive the first reference signal sent by the first communication apparatus, and record the first receiving time at which the first reference signal is received, so as to determine the first receiving time.

According to a fifth aspect, an embodiment of this application provides a communication apparatus, configured to perform the method in any one of the first aspect or the possible implementations. The communication apparatus includes a unit configured to perform the method in any one of the first aspect or the possible implementations.

According to a sixth aspect, an embodiment of this application provides a communication apparatus, configured to perform the method in any one of the second aspect or the possible implementations. The communication apparatus includes a unit configured to perform the method in any one of the second aspect or the possible implementations.

According to a seventh aspect, an embodiment of this application provides a communication apparatus, configured to perform the method in any one of the third aspect or the possible implementations. The communication apparatus includes a unit configured to perform the method in any one of the third aspect or the possible implementations.

According to an eighth aspect, an embodiment of this application provides a communication apparatus, configured to perform the method in any one of the fourth aspect or the possible implementations. The communication apparatus includes a unit configured to perform the method in any one of the fourth aspect or the possible implementations.

According to a ninth aspect, an embodiment of this application provides a communication apparatus. The communication apparatus includes a processor, configured to perform the method in any one of the first aspect or the possible implementations. Alternatively, the processor is configured to execute a program stored in a memory. When the program is executed, the method in any one of the first aspect or the possible implementations is performed.

In a possible implementation, the memory is located outside the communication apparatus.

In a possible implementation, the memory is located in the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal.

According to a tenth aspect, an embodiment of this application provides a communication apparatus. The communication apparatus includes a processor, configured to perform the method in any one of the second aspect or the possible implementations. Alternatively, the processor is configured to execute a program stored in a memory. When the program is executed, the method in any one of the second aspect or the possible implementations is performed.

In a possible implementation, the memory is located outside the communication apparatus.

In a possible implementation, the memory is located in the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal.

According to an eleventh aspect, an embodiment of this application provides a communication apparatus. The communication apparatus includes a processor, configured to perform the method in any one of the third aspect or the possible implementations. Alternatively, the processor is configured to execute a program stored in a memory. When the program is executed, the method in any one of the third aspect or the possible implementations is performed.

In a possible implementation, the memory is located outside the communication apparatus.

In a possible implementation, the memory is located in the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal.

According to a twelfth aspect, an embodiment of this application provides a communication apparatus. The communication apparatus includes a processor, configured to perform the method in any one of the fourth aspect or the possible implementations. Alternatively, the processor is configured to execute a program stored in a memory. When the program is executed, the method in any one of the fourth aspect or the possible implementations is performed.

In a possible implementation, the memory is located outside the communication apparatus.

In a possible implementation, the memory is located in the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal.

According to a thirteenth aspect, an embodiment of this application provides a communication apparatus. The communication apparatus includes a logic circuit and an interface. The logic circuit is coupled to the interface. The interface is configured to input a first message and output uplink data, and the logic circuit is configured to determine a first TA value.

It may be understood that, for descriptions of the first message and the first TA value, refer to the method in any one of the first aspect or the possible implementations. Details are not described herein again.

According to a fourteenth aspect, an embodiment of this application provides a communication apparatus. The communication apparatus includes a logic circuit and an interface. The logic circuit is coupled to the interface. The logic circuit is configured to determine first time information, and the interface is configured to output a first message.

It may be understood that, for descriptions of the first time information and the first message, refer to the method in any one of the second aspect or the possible implementations. Details are not described herein again.

According to a fifteenth aspect, an embodiment of this application provides a communication apparatus. The communication apparatus includes a logic circuit and an interface. The logic circuit is coupled to the interface. The interface is configured to input a fifth message and output a second message.

It may be understood that, for descriptions of the fifth message and the second message, refer to the method in any one of the third aspect or the possible implementations. Details are not described herein again.

According to a sixteenth aspect, an embodiment of this application provides a communication apparatus. The communication apparatus includes a logic circuit and an interface. The logic circuit is coupled to the interface. The interface is configured to input a second request message and output a fifth message.

It may be understood that, for descriptions of the second request message and the fifth message, refer to the method in any one of the fourth aspect or the possible implementations. Details are not described herein again.

According to a seventeenth aspect, an embodiment of this application provides a computer-readable storage medium. The computer-readable storage medium is configured to store a computer program. When the computer program is run on a computer, the method in any one of the first aspect or the possible implementations of the first aspect is enabled to be performed, the method in any one of the second aspect or the possible implementations of the second aspect is enabled to be performed, the method in any one of the third aspect or the possible implementations of the third aspect is enabled to be performed, or the method in any one of the fourth aspect or the possible implementations of the fourth aspect is enabled to be performed.

According to an eighteenth aspect, an embodiment of this application provides a computer program product. The computer program product includes a computer program or computer code. When the computer program product runs on a computer, the method in any one of the first aspect or the possible implementations of the first aspect is enabled to be performed, the method in any one of the second aspect or the possible implementations of the second aspect is enabled to be performed, the method in any one of the third aspect or the possible implementations of the third aspect is enabled to be performed, or the method in any one of the fourth aspect or the possible implementations of the fourth aspect is enabled to be performed.

According to a nineteenth aspect, an embodiment of this application provides a communication system. The communication system includes but is not limited to at least one of the following: a first communication apparatus, a second communication apparatus, a third communication apparatus, and a fourth communication apparatus. The first communication apparatus is configured to perform the method in any one of the first aspect or the possible implementations of the first aspect, the second communication apparatus is configured to perform the method in any one of the second aspect or the possible implementations of the second aspect, the fourth communication apparatus is configured to perform the method in any one of the third aspect or the possible implementations of the third aspect, and the third communication apparatus is configured to perform the method in any one of the fourth aspect or the possible implementations of the fourth aspect.

## BRIEF DESCRIPTION OF DRAWINGS

The following describes accompanying drawings used in embodiments of this application.

FIG. 1 is a diagram of a structure of a communication system according to an embodiment of this application;
FIG. 2A is a diagram of a structure of a communication system in an intra-CU scenario according to an embodiment of this application;
FIG. 2B is a diagram of a structure of a communication system in an inter-CU scenario according to an embodiment of this application;
FIG. 3 is a diagram of a handover procedure according to an embodiment of this application;
FIG. 4 is a diagram of a random access procedure according to an embodiment of this application;

FIG. 5 is an interaction diagram of a communication method according to an embodiment of this application;

FIG. 6 is a diagram of a relationship between a first TA value and a second TA value according to an embodiment of this application;

FIG. 7 is an interaction flowchart of another communication method according to an embodiment of this application;

FIG. 8 is an interaction flowchart of still another communication method according to an embodiment of this application;

FIG. 9 is an interaction flowchart of still another communication method according to an embodiment of this application;

FIG. 10 is an interaction flowchart of still another communication method according to an embodiment of this application;

FIG. 11 is an interaction flowchart of still another communication method according to an embodiment of this application;

FIG. 12 is an interaction flowchart of still another communication method according to an embodiment of this application;

FIG. 13 is an interaction flowchart of still another communication method according to an embodiment of this application;

FIG. 14 is an interaction flowchart of still another communication method according to an embodiment of this application;

FIG. 15 is an interaction flowchart of still another communication method according to an embodiment of this application; and

FIG. 16 to FIG. 18 each are a diagram of a structure of a communication apparatus according to an embodiment of this application.

## DESCRIPTION OF EMBODIMENTS

In the specification, claims, and accompanying drawings of this application, the terms "first", "second", and the like are merely intended to distinguish between different objects, but do not limit a sequence, a time sequence, a priority, or an importance degree of a plurality of objects. In embodiments of this application, "a plurality of" refers to two or more. In addition, the terms "include" and "have" and any variations thereof are intended to cover non-exclusive inclusion. For example, a process, method, system, product, or device that includes a series of steps or units is not limited to the listed steps or units, but optionally further includes an unlisted step or unit, or optionally further includes another inherent step or unit for the process, method, product, or device. In addition, the character "/" generally indicates an "or" relationship between the associated objects.

The "embodiment" mentioned in this specification means that specific features, structures, or characteristics described with reference to the embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

A terminal device in embodiments of this application may be a terminal that accesses a communication system and has a wireless transceiver function, or a chip or a chip system that may be disposed in the terminal. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a device that provides voice and/or data connectivity for a user, or may include a device that can perform sidelink (sidelink) communication, for example, a vehicle-mounted terminal, or a handheld terminal that can perform vehicle-to-everything (vehicle-to-everything, V2X) communication. For example, the terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

A network device in embodiments of this application may be a network device that accesses the communication system and has a wireless transceiver function, or a chip or a chip system that may be disposed in the network device. The network device may be a device that connects the terminal device to a wireless network, and may be specifically a base station. Various forms of base stations may be included, for example, a macro base station, a micro base station (also referred to as a small cell), a relay station, and an access point. The base station may be specifically an access point (access point, AP) in a wireless local area network (wireless local area network, WLAN), a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (Evolved NodeB, eNB or eNodeB), a relay station, an access point, a vehicle-mounted device, or a wearable device in LTE, a next generation NodeB (next generation NodeB, gNB) in a 5G system, a base station in a future evolved public land mobile network (public land mobile network, PLMN), or the like. In a possible manner, the network device may be a base station (for example, a gNB) having an architecture in which a central unit (central unit, CU) and a distributed unit (distributed unit, DU) are separated.

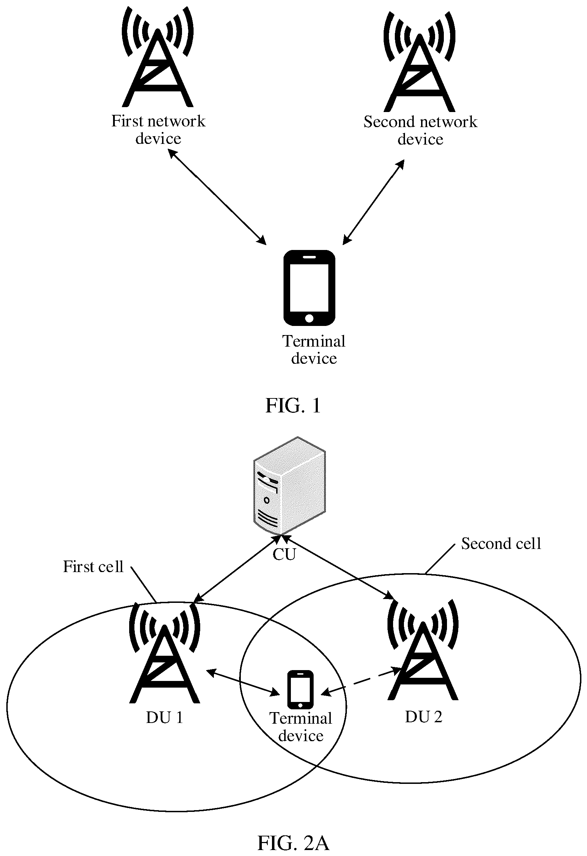

FIG. 1 is an example of a communication system according to an embodiment of this application. As shown in FIG. 1, the communication system may include at least one network device and at least one terminal device. In FIG. 1, two network devices and one terminal device are used as an example. The two network devices are respectively a first network device and a second network device. The terminal device may be connected to the first network device through a Uu interface.

In a possible implementation, the first network device and the second network device may be base stations in a CU-DU split architecture. For example, the first network device may include a CU 1 and a DU 1, and the second network device may include a CU 2 and a DU 2. For example, the first network device and the second network device may use a same CU but different DUs. In other words, the CU 1 and the CU 2 may be a same CU. As shown in FIG. 2A, the DU 1 and the DU 2 may be deployed under a same CU, and the terminal device is connected to the DU 1. For example, the terminal device camps on a first cell of the DU1.

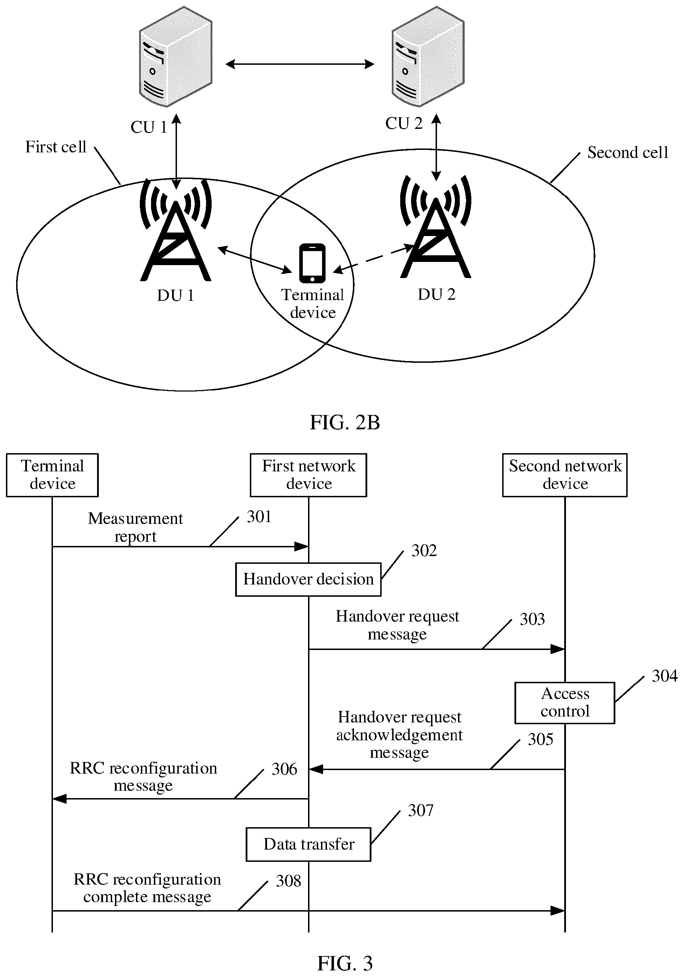

Optionally, the first network device and the second network device may use different CUs and different DUs. As shown in FIG. 2B, the DU 1 is deployed under the CU 1, the DU 2 is deployed under the CU 1, and the terminal device is connected to the DU 1.

For example, in the communication system, the terminal device is mobile, and each network device has a limited coverage area. Therefore, the terminal device may switch between different network devices in a moving process. For example, the terminal device may switch between the first network device and the second network device. For example, the terminal device may switch from the first cell of the DU 1 to a second cell of the DU 2. For example, a procedure in which the terminal device switches from the first network device to the second network device is shown in FIG. 3. Steps in FIG. 3 are described below.

301: The terminal device reports a measurement report to the first network device. For example, the first network device performs measurement configuration for the terminal device, and the terminal device performs measurement and reporting based on the measurement configuration of the first network device.

302: The first network device makes a handover decision based on the measurement report. For example, the first network device determines, based on the measurement report, whether the terminal device needs to be handed over, and determines a target network device (for example, the second network device) for handover.

303: The first network device sends a handover request (Handover Request) message to the second network device. When determining that the terminal device needs to be handed over to the second network device, the first network device sends the handover request message to the second network device.

304: The second network device performs access control. For example, the second network device determines, based on a quantity of connections, load, or other statuses of the second network device, whether to allow access of the terminal device.

305: The second network device returns a handover request acknowledgement (Handover Request Acknowledgement) message to the first network device.

306: The first network device sends a radio resource control (radio resource control, RRC) reconfiguration message to the terminal device, and correspondingly, the terminal device receives the RRC reconfiguration message. After receiving the RRC reconfiguration message, the terminal device disconnects from the first network device, and accesses the second network device in a random access process.

307: The first network device performs data transfer (data forwarding).

308: The terminal device sends an RRC reconfiguration complete message to the second network device, to complete a handover process.

In the handover process shown in FIG. 3, when the terminal device disconnects from the first network device and establishes a connection to the second network device for data communication, the terminal device needs to perform downlink timing synchronization and uplink timing synchronization with the second network device. The downlink timing synchronization (a downlink radio frame, a subframe, a slot, a symbol boundary, and a corresponding index number) is implemented by the terminal device by searching for a downlink reference signal (for example, a synchronization signal block (synchronization signal block, SSB)) sent by the second network device, and the uplink timing synchronization is implemented by the terminal device in the random access process.

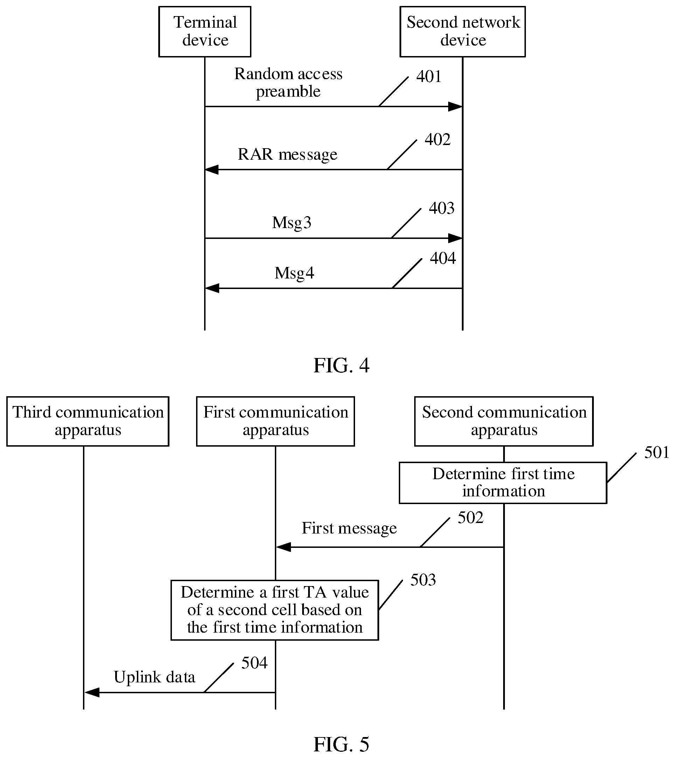

For example, the second network device may indicate the terminal device to perform contention-based random access (contention-based random access, CBRA) or contention-free random access (contention-free random access, CFRA). A CBRA procedure executed by the terminal device is shown in FIG. 4. That the terminal device performs CBRA may include the following steps.

401: The terminal device sends a random access preamble (random access preamble) to the second network device, where the random access preamble is used to request random access to the second network device. The second network device may estimate a transmission delay between the second network device and the terminal device based on the random access preamble, so that the second network device can calibrate an uplink timing advance (timing advance, TA) value and notify the terminal device of calibration information via a timing advance command (timing advance command).

402: The terminal device receives a random access response (random access response, RAR) message sent by the second network device. For example, the terminal device may monitor a physical downlink control channel (physical downlink control channel, PDCCH) by using a random access radio network temporary identifier (random access radio network temporary identifier, RA-RNTI), to receive the RAR message delivered by the second network device. The RAR message includes the timing advance command, an uplink grant (uplink grant, UL grant) allocated to a message 3 (message 3, Msg3), a temporary cell radio network temporary identifier (cell radio network temporary identifier, temporary C-RNTI) allocated by the second network device, and the like. The terminal device may adjust uplink timing by using the timing advance value in the timing advance command in the RAR message.

403: The terminal device sends a message (Msg3) that is based on scheduling transmission to the second network device.

404: The terminal device receives a contention resolution message (Msg4) sent by the second network device.

In the handover process shown in FIG. 4, the terminal device obtains, through a random access channel (random access channel, RACH), a TA value of a target cell to which the terminal device is to switch, to implement the uplink timing synchronization between the terminal device and the second network device. However, in the manner of obtaining the TA value through the RACH, it takes long time for the terminal device to disconnect from the first network device and then establish the connection to the second network device, resulting in service interruption of the terminal device for long time, and affecting service experience.

In view of this, embodiments of this application provide a communication method, a communication apparatus, and a communication system, to avoid service interruption caused by obtaining a TA value in a random access process.

FIG. 5 is an interaction diagram of a communication method according to an embodiment of this application. The communication method shown in FIG. 5 may be applied to the communication system shown in FIG. 1, FIG. 2A, or FIG. 2B. Alternatively, the method may be applied to a first communication apparatus and a second communication apparatus. The first communication apparatus may be the terminal device described above, and the second communication apparatus may be the network device described above or a DU in a split architecture. As shown in FIG. 5, the communication method includes but is not limited to the following steps.

501: The second communication apparatus determines first time information, where the first time information is determined based on a first transmission delay and a second transmission delay, the first transmission delay is a transmission delay from the first communication apparatus to the second communication apparatus, the second transmission delay is a transmission delay from the first communication apparatus to a third communication apparatus, the second communication apparatus is a communication apparatus corresponding to a first cell, and the third communication apparatus is a communication apparatus corresponding to a second cell.

For example, the first time information indicates a first TA value, and the first TA value is a TA value of the second cell. The first TA value is determined based on a second TA value and a first time difference. The second TA value is a TA value of the first cell or a TA value of a first timing advance group TAG of the first communication apparatus, and the first time difference is a difference between the first transmission delay and the second transmission delay.

For example, the second communication apparatus may allocate at least one TAG to the first communication apparatus, and the first TAG is one of the at least one TAG.

For example, the first cell may be a source cell on which the first communication apparatus camps before performing cell switching. The second cell may be a target cell to which the first communication apparatus is to switch.

For example, the second communication apparatus may determine the first time information based on interaction with the third communication apparatus or a fourth communication apparatus. For example, when the second communication apparatus is the network device described above, the second communication apparatus may determine the first time information based on the interaction with the third communication apparatus. For another example, when the second communication apparatus is the DU in the split architecture, the second communication apparatus may determine the first time information based on the interaction with the fourth communication apparatus. The second communication apparatus may be a DU corresponding to the first cell, and the fourth communication apparatus may be a CU corresponding to the DU.

For example, the second communication apparatus may determine the first time information after making a handover decision based on a measurement report reported by the first communication apparatus. Alternatively, the second communication apparatus may determine the first time information after receiving a handover request acknowledgement message. This is not limited in this application.

502: The second communication apparatus sends a first message, and correspondingly, the first communication apparatus receives the first message, where the first message includes the first time information.

For example, the first message may be a handover command, or may be included in the handover command. The handover command indicates the first communication apparatus to switch from the first cell to the second cell. In other words, the second communication apparatus may include the first time information in the handover command, so that the first communication apparatus can determine the first TA value based on the first time information.

For example, after receiving the first message, the first communication apparatus switches from the first cell to the second cell.

503: The first communication apparatus determines the first TA value of the second cell based on the first time information.

For example, the first time information indicates the first TA value, and the first TA value indicates an occasion at which the first communication apparatus sends uplink data to the third communication apparatus. The first communication apparatus may determine, based on the first time information, a TA value used when the first communication apparatus switches to the second cell.

In a possible implementation, the first time information includes the first TA value. The first communication apparatus may directly obtain the first TA value from the first time information. In other words, the first communication apparatus determines the TA value carried in the first time information as the TA value of the second cell.

In another possible implementation, the first communication apparatus determines the first TA value based on the first time information and a second TA value, where the second TA value is a TA value of the first cell or a TA value of a first TAG of the first communication apparatus.

For example, the first TAG is a TAG of the first communication apparatus. The first time information is related to a first time difference, and the first time difference is a difference between the first transmission delay and the second transmission delay.

For example, the first message may further include first indication information, where the first indication information indicates the first TAG, that is, the second TA value is the TA value of the TAG indicated by the first indication information. The second communication apparatus may allocate at least one TAG to the first communication apparatus, and indicate the first TAG in the at least one TAG via the first indication information, so that the first communication apparatus can determine the first TA value based on the TA value of the first TAG and the first time information. For example, the first indication information may include an index of the first TAG.

504: The first communication apparatus sends uplink data to the third communication apparatus based on the first TA value.

For example, the first communication apparatus may send uplink data to the third communication apparatus in advance by the first TA value, to implement uplink timing synchronization.

In this embodiment of this application, the first cell may be a source cell on which the first communication apparatus camps, and the second cell may be a target cell to which the first communication apparatus is to switch. The first TA value indicates an occasion at which the first communication apparatus sends uplink data to the third communication apparatus. The second communication apparatus may obtain the first time information based on the first transmission delay and the second transmission delay, and indicate the first TA value of the second cell by including the first time information in the first message. The first communication apparatus may determine the first TA value based on the first time information, and does not need to determine the TA value of the second cell in a random access process, to avoid service interruption caused by obtaining the TA value of the second cell in the random access process, and reduce interruption duration of the first communication apparatus in a process in which the first communication apparatus switches from the second communication apparatus to the third communication apparatus.

In this application, a manner in which the first communication apparatus does not obtain the TA value through an RACH in a handover process may be referred to as random access-less handover (RACH-less handover, RACH-less HO). It may be understood that the second communication apparatus and the third communication apparatus may be deployed at a same site, or may not be deployed at the same site. In other words, deployment of the second communication apparatus and the third communication apparatus is not limited in this application. Therefore, this application has a universal application scenario.

To describe the first time information in more detail, this embodiment of this application further provides the following several implementations.

Implementation 1: The first time information includes the first TA value, the first TA value is determined based on a second TA value and a first time difference, the first TA value is a TA value of the second cell, the second TA value is a TA value of the first cell or a TA value of a first TAG, and the first time difference is a difference between the first transmission delay and the second transmission delay.

In this implementation, the first communication apparatus may directly obtain the TA value of the second cell from the first time information, that is, the first communication apparatus determines the first TA value included in the first time information as the TA value of the second cell.

The second communication apparatus may determine the first TA value based on the second TA value and the first time difference.

For example, the first TA value satisfies the following formula:

$$TA1 = TA2 - 2 * UL\_TDOA \quad (1)$$

TA1 is the first TA value, TA2 is the second TA value, and UL_TDOA is the first time difference.

For example, the second communication apparatus may obtain the first TA value through calculation based on Formula (1). It may be understood that, in some implementations, a value of the first TA value may not be equal to TA2- 2 * UL_TDOA. For example, the value of the first TA value may be within a first value range, and the first value range includes TA2- 2 * UL_TDOA, that is, the first TA value is approximately equal to TA2- 2 * UL_TDOA. For example, the first value range may be a range centered on TA2- 2 * UL_TDOA. For example, the first value range is a range from x% of TA2- 2 * UL_TDOA to y% of TA2- 2 * UL_TDOA. x is less than 100, and y is greater than 100. For example, the first value range may be a range from 95% of TA2 - 2 * UL_TDOA to 105% of TA2- 2 * UL_TDOA. It may be understood that specific values of x and y may be determined in a specific implementation process.

In a possible implementation, the second communication apparatus may determine the first TA value based on the second TA value, the first time difference, and a first downlink timing offset, where the first downlink timing offset is a downlink timing offset between the first cell and the second cell.

For example, when downlink timing of the first cell is not synchronized with downlink timing of the second cell, the second communication apparatus may determine the first TA value based on the second TA value, the first time difference, and the first downlink timing offset. The downlink timing offset between the first cell and the second cell may be understood as a difference between two closest subframe boundaries of the first cell and the second cell in time domain.

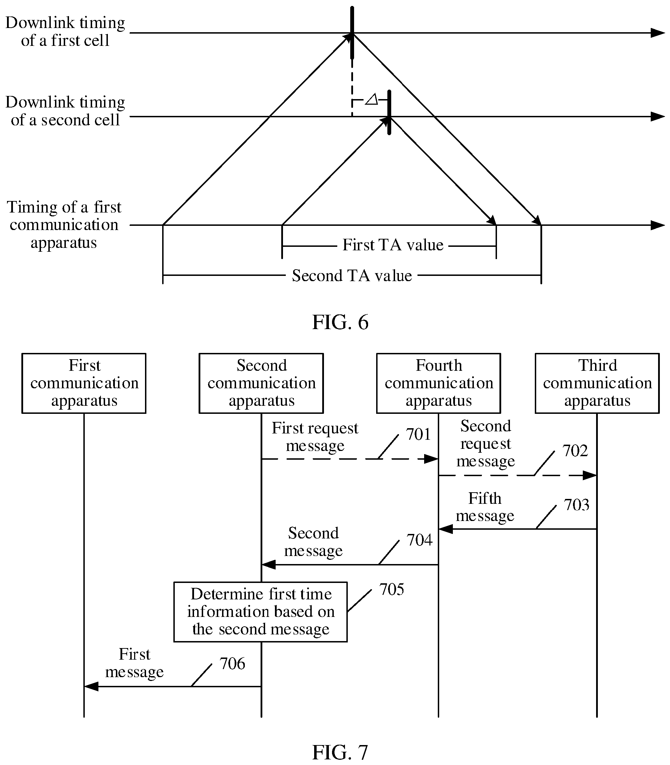

For example, as shown in FIG. 6, the difference between the two closest subframe boundaries of the first cell and the second cell in time domain is $\Delta$, that is, the first downlink timing difference is $\Delta$, a distance from the first communication apparatus to the second communication apparatus and a distance from the first communication apparatus to the third communication apparatus are respectively d1 and d2, a signal propagation speed is c, and the first time difference satisfies the following formula:

$$UL\_TDOA = (d1 - d2)/c + \Delta \quad (2)$$

UL_TDOA is the first time difference.

For example, the first TA value satisfies the following formula:

$$TA1 = TA2 - 2 * (UL_{TDOA} - \Delta) \quad (3)$$

TA1 is the first TA value, TA2 is the second TA value, UL_TDOA is the first time difference, and $\Delta$ is the first downlink timing offset.

The second communication apparatus may obtain the first TA value through calculation based on Formula (3). It may be understood that, in some implementations, the first TA value may not be equal to TA2- 2 * (UL_{TDOA}- $\Delta$). For example, the value of the first TA value may be within a second value range, and the second value range includes TA2- 2 * (UL_{TDOA}-$\Delta$), or the value of the first TA value is approximately equal to TA2- 2 * (UL_{TDOA}-$\Delta$). For example, the first value range may be a range centered on TA2- 2 * (UL_{TDOA}-$\Delta$).

For example, a derivation process of Formula (3) may be as follows:

$$TA1 = TA2 - [(d1-d2)/c + \Delta] - [(d1-d2)/c - \Delta] = TA2 - 2*(d1-d2)/c = TA1 - 2*(UL\_TDOA - \Delta)$$

In this implementation, the first time information includes the first TA value, and the first communication apparatus can directly obtain the first TA value from the first time information, so that the first communication apparatus can quickly determine the first TA value. The second communication apparatus may obtain the first TA value through calculation based on the first time difference, the second TA value, and the first downlink timing offset, so that the obtained first TA value can more accurately indicate the occasion at which the first communication apparatus sends the uplink data, that is, accuracy of the obtained first TA value is higher.

Implementation 2: The first time information includes a first time difference, and the first time difference is a difference between the first transmission delay and the second transmission delay.

In this implementation, the first communication apparatus may determine the first TA value based on the first time difference and a second TA value. The first time difference may be understood as a difference between time of arrival of a first reference signal that is sent by the first communication apparatus and received by the second communication apparatus and time of arrival of the first reference signal that is sent by the first communication apparatus and received by the third communication apparatus.

In a possible implementation, the second TA value is a TA value of the second cell. When downlink timing of the first cell is synchronized with downlink timing of the second cell, that is, when subframe boundaries of the first cell and the second cell in time domain are the same, the second communication apparatus may include the first time difference in the first time information, and the first communication apparatus determines the first TA value based on the first time difference and the second TA value.

For example, the first communication apparatus may determine the first TA value based on Formula (1).

In a possible implementation, the first communication apparatus may determine downlink frame timing of the second cell based on the first time difference and first downlink frame timing, where the first downlink frame timing is downlink frame timing of the first cell or downlink frame timing of the first TAG.

For example, the downlink frame timing of the first cell indicates an occasion at which the first communication apparatus receives downlink data of the first cell, the downlink frame timing of the first TAG indicates an occasion at which the first communication apparatus receives downlink data of a carrier in the first TAG, and the downlink frame timing of the second cell indicates an occasion at which the first communication apparatus receives downlink data of the second cell. The first communication apparatus may determine the downlink frame timing of the second cell based on the first time information and the first downlink frame timing, so that the first communication apparatus can perform downlink data transmission with the third communication apparatus based on the downlink frame timing of the second cell, to implement downlink timing synchronization between the first communication apparatus and the third communication apparatus.

In some implementations, the downlink frame timing of the second cell is obtained by adjusting the first downlink frame timing by the first time difference. For example, the first communication apparatus may adjust the first downlink frame timing forward or backward by the first time difference, to obtain the downlink frame timing of the second cell. For example, when a first distance is less than a second distance, the downlink frame timing of the second cell is obtained by adjusting the first downlink frame timing backward by the first time difference. The first distance is a distance from the first communication apparatus to the second communication apparatus, and the second distance is a distance from the first communication apparatus to the third communication apparatus. For another example, when a first distance is greater than a second distance, the downlink frame timing of the second cell is obtained by adjusting the first downlink frame timing forward by the first time difference.

In a possible implementation, the first message further includes a first value, and the first value indicates a difference between radio frame numbers corresponding to two closest subframe boundaries of the first cell and the second cell in time domain and/or a difference between subframe numbers corresponding to the two subframe boundaries. For example, when the radio frame numbers and/or the subframe numbers corresponding to the two subframe boundaries corresponding to the first downlink timing offset are different, the second communication apparatus may indicate, by using the first value, a difference between the radio frame numbers corresponding to the two subframe boundaries and/or a difference between the subframe numbers corresponding to the two subframe boundaries, so that the first communication apparatus can determine, based on the first message, the downlink frame timing of the second cell and a number of a downlink subframe of the second cell.

In this implementation, the first communication apparatus may determine the first TA value based on the first time difference and the second TA value, so that accuracy of the obtained first TA value may be higher.

Implementation 3: The first time information includes a first time difference and a first downlink timing offset.

In this implementation, the first communication apparatus may determine the first TA value based on the first time difference, the second TA value, and the first downlink timing offset. For example, when downlink timing of the first cell is not synchronized with downlink timing of the second cell, the second communication apparatus may include the first time difference and the first downlink timing offset in the first time information, and the first communication apparatus determines the first TA value based on the first time difference, the second TA value, and the first downlink timing offset.

For example, the first communication apparatus may determine the first TA value based on Formula (3).

In a possible implementation, the first communication apparatus may determine downlink frame timing of the second cell based on the first time difference, first downlink frame timing, and the first downlink timing offset, where the first downlink frame timing is downlink frame timing of the first cell or downlink frame timing of the first TAG.

For example, the first communication apparatus adjusts the first downlink frame timing forward or backward by a third time difference, to obtain the downlink frame timing of the second cell, where the third time difference is determined based on the first time difference and the first downlink timing offset. For example, when a first distance is less than a second distance, the downlink frame timing of the second cell is obtained by adjusting the first downlink frame timing backward by the third time difference. For another example, when a first distance is greater than a second distance, the downlink frame timing of the second cell is obtained by adjusting the first downlink frame timing forward by the third time difference.

For example, the third time difference satisfies the following formula:

$$T = UL_{TDOA} - 2 * \Delta \quad (4)$$

T is the third time difference, UL_TDOA is the first time difference, and $\Delta$ is the first downlink timing offset.

In a possible implementation, the first message further includes a first value, and the first value indicates a difference between radio frame numbers corresponding to two closest subframe boundaries of the first cell and the second cell in time domain and/or a difference between subframe numbers corresponding to the two subframe boundaries. For example, when the radio frame numbers and/or the subframe numbers corresponding to the two subframe boundaries corresponding to the first downlink timing offset are different, the second communication apparatus may indicate, by using the first value, a difference between the radio frame numbers corresponding to the two subframe boundaries and/or a difference between the subframe numbers corresponding to the two subframe boundaries, so that the first communication apparatus can determine, based on the first message, the downlink frame timing of the second cell and a number of a downlink subframe of the second cell.

In this implementation, when the downlink timing of the first cell is not synchronized with the downlink timing of the second cell, the first TA value is further related to the first downlink timing offset. The first communication apparatus obtains the first TA value through calculation based on the first time difference, the first downlink timing offset, and the second TA value, so that accuracy of the obtained first TA value may be higher.

Implementation 4: The first time information includes a second time difference, and the second time difference is a difference between a round-trip transmission delay from the first communication apparatus to the second communication apparatus and a round-trip transmission delay from the first communication apparatus to the third communication apparatus.

In this implementation, the first communication apparatus determines the first TA value based on the second time difference and the second TA value. The second time difference may be obtained through calculation based on the first time difference.

For example, the second time difference may be twice a difference between time of arrival of a first reference signal that is sent by the first communication apparatus and received by the second communication apparatus and time of arrival of the first reference signal that is sent by the first communication apparatus and received the third communication apparatus, that is, the second time difference may satisfy the following formula:

$$TA_{offset} = 2 * UL\_TDOA \quad (5)$$

TA_offset is the second time difference, and UL_TDOA is the first time difference.

The second communication apparatus may obtain the second time difference through calculation based on Formula (5).

In a possible implementation, the second time difference may be obtained based on the first time difference and a first downlink timing offset. For example, the second time difference may satisfy the following formula:

$$TA\_offset = 2 * (UL_{TDOA} - \Delta) \quad (6)$$

TA_offset is the second time difference, UL_TDOA is the first time difference, and $\Delta$ is the first downlink timing offset.

For example, when downlink timing of the first cell is not synchronized with downlink timing of the second cell, the second communication apparatus may obtain the second time difference through calculation based on Formula (6). In this embodiment of this application, when the downlink timing of the first cell is not synchronized with the downlink timing of the second cell, the second time difference is related to the first downlink timing offset. The second communication apparatus may obtain the second time difference through calculation based on the first time difference and the first downlink timing offset, so that accuracy of the obtained second time difference is higher.

In some implementations, the first TA value may be a sum of the second TA value and the second time difference, that is, the first TA value satisfies the following formula:

$$TA1 = TA2 + TA\_offset \quad (7)$$

TA1 is the first TA value, TA2 is the second TA value, and TA_offset is the second time difference.

For example, when a first distance is less than a second distance, the first communication apparatus may obtain the first TA value through calculation based on Formula (7).

In some other implementations, the first TA value may be a difference between the second TA value and the second time value, that is, the first TA value satisfies the following formula:

$$TA1 = TA2 - TA\_offset \quad (8)$$

TA1 is the first TA value, TA2 is the second TA value, and TA_offset is the second time difference.

For example, when a first distance is greater than a second distance, the first communication apparatus may obtain the first TA value through calculation based on Formula (8).

In this implementation, the first communication apparatus obtains the first TA value through calculation based on the second time difference and the second TA value, so that accuracy of the obtained first TA value may be higher.

FIG. 7 is an interaction diagram of another communication method according to an embodiment of this application. The method shown in FIG. 7 may be applied to the communication system shown in FIG. 2A. Alternatively, the method may be applied to a first communication apparatus, a second communication apparatus, a third communication apparatus, and a fourth communication apparatus. The first communication apparatus may be the terminal device described above, the second communication apparatus may be a DU in a split architecture, the third communication apparatus may be the network device (for example, a base station in a CU-DU split architecture) described above, and the fourth communication apparatus may be a CU corresponding to the second communication apparatus. As shown in FIG. 7, the method includes but is not limited to the following steps.

In some possible implementations, the method shown in FIG. 7 includes step 701.

701: The second communication apparatus sends a first request message, and correspondingly, the fourth communication apparatus receives the first request message, where the first request message is used to request to obtain a second message, and the second message indicates first time information.

For example, the first request message may be used to request one or more of a first time difference, a first downlink timing offset, first downlink timing, and first receiving time. The first receiving time is time at which the third communication apparatus receives a first reference signal sent by the first communication apparatus, the first downlink timing is downlink timing of a second cell, and the third communication apparatus is a communication apparatus corresponding to the second cell. For example, the downlink timing of the second cell indicates time corresponding to a system frame boundary, a subframe boundary, or a slot boundary of the second cell.

For example, after making a handover decision based on a measurement report reported by the first communication apparatus, the second communication apparatus may send the first request message to the fourth communication apparatus, to request to obtain the second message, so as to determine the first time information based on the second message. Alternatively, the second communication apparatus may determine when to send the first request message to the fourth communication apparatus.

In some possible implementations, the first request message may indicate an occasion at which the fourth communication apparatus sends the second message. For example, the first request message indicates that the fourth communication apparatus immediately feeds back the second message after receiving the first request message. For another example, the first request message indicates that the fourth communication apparatus feeds back the second message in a period of time after receiving the first request message. For another example, the first request message may indicate a specific moment at which the fourth communication apparatus sends the second message. In this implementation, the second communication apparatus may indicate, via the first request message, the occasion at which the fourth communication apparatus sends the second message, so that interaction efficiency between the second communication apparatus and the fourth communication apparatus can be improved.

In some implementations, the method shown in FIG. 7 includes step 702.

702: The fourth communication apparatus sends a second request message, and correspondingly, the third communication apparatus receives the second request message, where the second request message is used to request the first receiving time or the first downlink timing.

It may be understood that the fourth communication apparatus may send the second request message to the third communication apparatus after receiving the first request message. Alternatively, the fourth communication apparatus may send the second request message to the third communication apparatus before receiving the second request message. This is not limited in this application.

In some implementations, the second request message may be a handover request message or may be included in the handover request message, and the handover request message is used to request to hand over the first communication apparatus to the third communication apparatus.

703: The third communication apparatus sends a fifth message, and correspondingly, the fourth communication apparatus receives the fifth message, where the fifth message includes the first receiving time or the first downlink timing.

704: The fourth communication apparatus sends the second message, and correspondingly, the second communication apparatus receives the second message, where the second message indicates the first time information.

For example, the second message may include one or more of the first time difference, the first downlink timing offset, the first downlink timing, and the first receiving time.

It may be understood that, for specific descriptions of the first time information, refer to the foregoing related descriptions. Details are not described herein again.

705: The second communication apparatus determines the first time information based on the second message.

For example, the second communication apparatus may determine the first time information based on one or more of the first time difference, the first downlink timing offset, the first downlink timing, and the first receiving time.

It may be understood that, for specific descriptions of the first time information, refer to the foregoing related descriptions. Details are not described herein again.

706: The second communication apparatus sends a first message, and correspondingly, the first communication apparatus receives the first message, where the first message includes the first time information.

In this embodiment of this application, the first request message may include one or more of the first time difference, the first downlink timing offset, the first downlink timing, and the first receiving time. The second communication apparatus may determine the first time information based on the second message, so that the first communication apparatus can determine a first TA value based on the first time information, to avoid service interruption caused by obtaining the first TA value in a random access process, and reduce interruption duration in a process in which the terminal device switches from a first DU to a second DU.

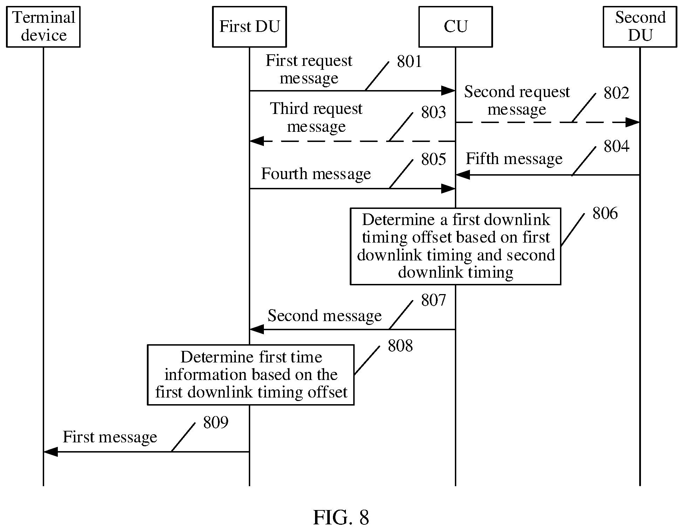

FIG. 8 is an interaction flowchart of still another communication method according to an embodiment of this application. The method shown in FIG. 8 may be applied to the communication system shown in FIG. 2A. Alternatively, the method may be applied to a terminal device, a first DU, a CU, and a second DU. The first DU and the second DU are deployed under the CU. For example, the terminal device may be the first communication apparatus shown above, the first DU may be the second communication apparatus shown above, the CU may be the fourth communication apparatus shown above, and the second DU may be the third communication apparatus shown above. As shown in FIG. 8, the method includes but is not limited to the following steps.

801: The first DU sends a first request message, and correspondingly, the CU receives the first request message, where the first request message is used to request a first downlink timing offset.

In some implementations, the method shown in FIG. 8 includes step 802 and step 803.

802: The CU sends a second request message, and correspondingly, the second DU receives the second request message, where the second request message is used to request first downlink timing, the first downlink timing is downlink timing of a second cell, and the second DU is a DU corresponding to the second cell.

803: The CU sends a third request message, and correspondingly, the first DU receives the third request message, where the third request message is used to request second downlink timing, the second downlink timing is downlink timing of a first cell, and the first DU is a DU corresponding to the first cell.

804: The second DU sends a fifth message, and correspondingly, the CU receives the fifth message, where the fifth message includes the first downlink timing.

For example, the first downlink timing may include a first time value, and the first time value is time corresponding to a first radio frame, time corresponding to a first subframe, or time corresponding to a first slot. The first time value may be global positioning system (global positioning system, GPS) time or universal time coordinated (universal time coordinated, UTC) time. For example, the first downlink timing may further include a radio frame number of the first radio frame, a subframe number of the first subframe in the radio frame, or a number of the first slot in the radio frame or the subframe.

Optionally, the fifth message may further include information about the second cell, for example, a cell index (cell index) of the second cell.

805: The first DU sends a fourth message, and correspondingly, the CU receives the fourth message, where the fourth message includes the second downlink timing.

For example, the second downlink timing may include a second time value, and the second time value is time corresponding to a second radio frame, time corresponding to a second subframe, or time corresponding to a second slot. The second time value may be GPS time or UTC time. For example, the second downlink timing may further include a radio frame number of the second radio frame, a subframe number of the second subframe in the radio frame, or a number of the second slot in the radio frame or the subframe.

Optionally, the fourth message may further include information about the first cell, for example, a cell index of the first cell.

806: The CU determines the first downlink timing offset based on the first downlink timing and the second downlink timing.

For example, the CU may determine, based on the first downlink timing and the second downlink timing, a difference between two closest subframe boundaries of the first cell and the second cell in time domain, to obtain the first downlink timing offset. For example, the first time value indicates the time corresponding to the first subframe, and the second time value indicates the time corresponding to the second subframe. If subframes corresponding to the two closest subframe boundaries of the first cell and the second cell in time domain are the first subframe and the second subframe, the CU may calculate a difference between the first time value and the second time value, to obtain the first downlink timing offset.

807: The CU sends a second message, and correspondingly, the first DU receives the second message, where the second message includes the first downlink timing offset.

808: The first DU determines first time information based on the first downlink timing offset.

For example, the first time information indicates a first TA value, and the first time information may include the first TA value, a first time difference, the first downlink timing offset, or a second time difference.

In a possible implementation, the first time information includes the first downlink timing offset.

In another possible implementation, the first time information includes the first TA value, and the first DU may determine the first TA value based on the second TA value, the first time difference, and the first downlink timing offset. For example, the first DU may obtain the first TA value through calculation based on Formula (3).

In still another possible implementation, the first time information includes the second time difference, and the first DU determines the second time difference based on the first downlink timing offset and the first time difference. For example, the first DU may obtain the second time difference through calculation based on Formula (6).

809: The first DU sends a first message, and correspondingly, the terminal device receives the first message, where the first message includes the first time information.

For example, the first message may be a handover command. In a handover procedure triggered via layer 1 (layer 1, L1) signaling or layer 2 (layer 2, L2) signaling, the first DU may send the first downlink timing offset to the terminal device via the handover command. It may be understood that, in a handover procedure triggered based on layer 3 (layer 3, L3) signaling, the CU may directly include the first downlink timing offset in an L3 handover command, and may send the first downlink timing offset to the terminal device via the L3 handover command. In other words, in the handover procedure triggered based on the L3 signaling, step 801 and step 807 do not need to be performed.

Optionally, when radio frame numbers and/or subframe numbers corresponding to the two closest subframe boundaries of the first cell and the second cell in time domain are different, the CU may further determine a first value, where the first value indicates a difference between the radio frame numbers corresponding to the two subframe boundaries and/or a difference between the subframe numbers corresponding to the two subframe boundaries. For example, in the handover procedure triggered via the layer L1 signaling or layer L2 signaling, the CU may send the first value to the first DU via the second message, and the first DU sends the first value to the terminal device via the first message. In the handover procedure triggered based on the L3 signaling, the CU may include the first value in the L3 handover command, and send the first value to the terminal device via the L3 handover command.

It may be understood that step 801 may be performed before step 802 to step 806, or may be performed after step 802 to step 806. This is not limited in this application. In some possible implementations, the first request message and the fourth message may be a same message, that is, the message includes the second downlink timing, and is used to request the first downlink timing offset.

In this embodiment of this application, in a scenario in which the first network device and the second network device use a same CU and different DUs (or referred to as an intra-CU inter-DU scenario), the first downlink timing offset may be obtained through interaction between the first DU and the CU and interaction between the CU and the second DU, and the first time information may be determined based on the first downlink timing offset, so that the terminal device can determine the first TA value based on the first time information, to avoid service interruption caused by obtaining the first TA value in a random access process. In other words, in this application, the terminal device can perform RACH-less HO, to reduce interruption duration in a process in which the terminal device switches from the first DU to the second DU.

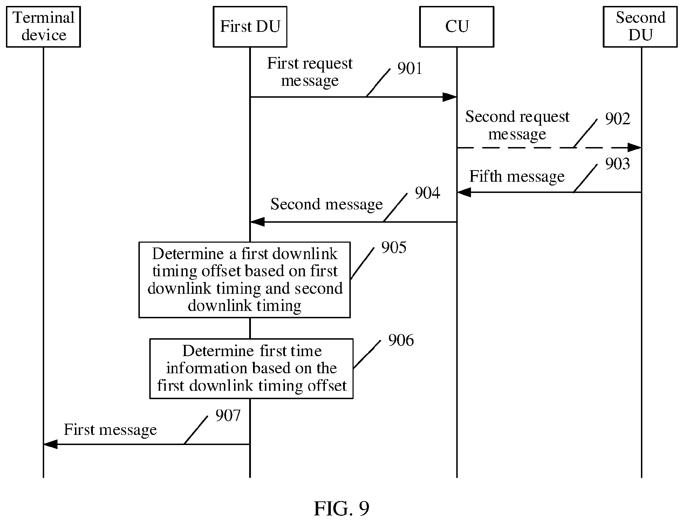

FIG. 9 is an interaction flowchart of still another communication method according to an embodiment of this application. The method shown in FIG. 9 may be applied to the communication system shown in FIG. 2A. Alternatively, the method may be applied to a terminal device, a first DU, a CU, and a second DU. The first DU and the second DU are deployed under the CU. The terminal device may be the first communication apparatus shown above, the first DU may be the second communication apparatus shown above, the CU may be the fourth communication apparatus shown above, and the second DU may be the third communication apparatus shown above. As shown in FIG. 9, the method includes but is not limited to the following steps.

901: The first DU sends a first request message, and correspondingly, the CU receives the first request message, where the first request message is used to request a first downlink timing offset.

In a possible implementation, the method shown in FIG. 9 includes step 902.

902: The CU sends a second request message, and correspondingly, the second DU receives the second request message, where the second request message is used to request first downlink timing, the first downlink timing is downlink timing of a second cell, and the second DU is a DU corresponding to the second cell.

903: The second DU sends a fifth message, and correspondingly, the CU receives the fifth message, where the fifth message includes the first downlink timing.

904: The CU sends a second message, and correspondingly, the first DU receives the second message, where the second message includes the first downlink timing.

It may be understood that the CU may send the second message after receiving the fifth message, or send the second message after receiving the first request message. For example, the second DU may periodically report the first downlink timing to the CU.

905: The first DU determines a first downlink timing offset based on the first downlink timing and second downlink timing.

It may be understood that for specific descriptions of the first downlink timing and the second downlink timing, refer to the related descriptions in step 804 and step 805 shown in FIG. 8. Details are not described herein again. For a specific implementation of determining the first downlink timing offset by the first DU, refer to the related descriptions of determining the first downlink timing offset by the CU in step 806 shown in FIG. 8. Details are not described herein again.

906: The first DU determines first time information based on the first downlink timing offset.

It may be understood that, for a specific implementation of step 906, refer to the specific implementation of step 808 shown in FIG. 8. Details are not described herein again.

907: The first DU sends a first message, and correspondingly, the terminal device receives the first message, where the first message includes the first time information.

In this embodiment of this application, in a scenario in which the first network device and the second network device use a same CU, the first DU may obtain the downlink timing of the second cell through interaction between the CU and the second DU, determine the first downlink timing offset based on downlink timing of a first cell and the downlink timing of the second cell, and determine the first time information based on the first downlink timing offset, so that the terminal device can determine a first TA value based on the first time information, to avoid service interruption caused by obtaining the first TA value in a random access process, that is, reduce interruption duration in a process in which the terminal device switches from the first DU to the second DU.

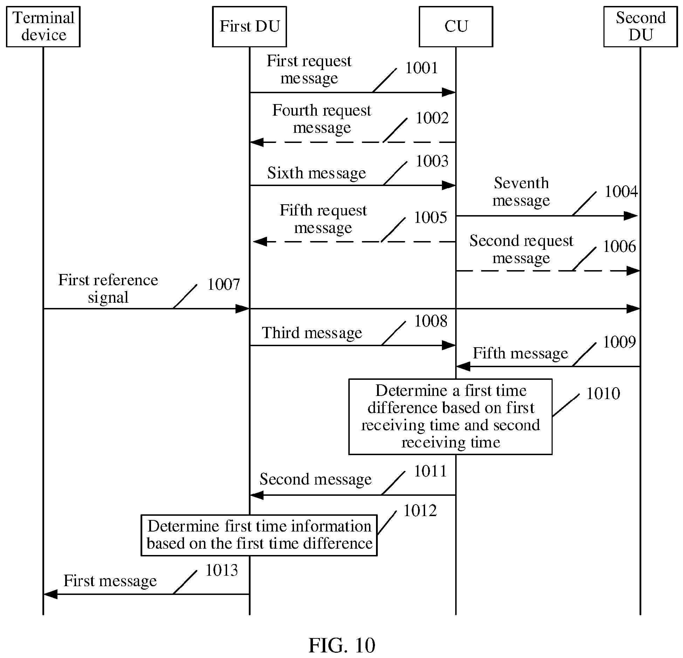

FIG. 10 is an interaction flowchart of still another communication method according to an embodiment of this application. The method shown in FIG. 10 may be applied to the communication system shown in FIG. 2A. Alternatively, the method may be applied to a terminal device, a first DU, a CU, and a second DU. The first DU and the second DU are deployed under the CU. The terminal device may be the first communication apparatus shown above, the first DU may be the second communication apparatus shown above, the CU may be the fourth communication apparatus shown above, and the second DU may be the third communication apparatus shown above. As shown in FIG. 10, the method includes but is not limited to the following steps.

1001: The first DU sends a first request message, and correspondingly, the CU receives the first request message, where the first request message is used to request a first time difference. The first time difference is a difference between a transmission delay from the terminal device to the first DU and a transmission delay from the terminal device to the second DU.

In a possible implementation, the method shown in FIG. 10 includes step 1002.

1002: The CU sends a fourth request message, and correspondingly, the first DU receives the fourth request message, where the fourth request message is used to request reference signal configuration information, and the reference signal configuration information is configuration information of a first reference signal sent by the terminal device.

For example, the first reference signal may be a sounding reference signal (sounding reference signal, SRS). The reference information configuration information may include a time-frequency resource corresponding to the first reference signal.

1003: The first DU sends a sixth message, and correspondingly, the CU receives the sixth message, where the sixth message includes the reference signal configuration information.

1004: The CU sends a seventh message, and correspondingly, the second DU receives the seventh message, where the seventh message includes the reference signal configuration information.

For example, the second DU determines, based on the reference signal configuration information, the time-frequency resource corresponding to the first reference signal sent by the terminal device.

In a possible implementation, the method shown in FIG. 10 may include step 1005 and step 1006.

1005: The CU sends a fifth request message, and correspondingly, the first DU receives the fifth request message, where the fifth request message is used to request second receiving time.

1006: The CU sends a second request message, and correspondingly, the second DU receives the second request message, where the second request message is used to request first receiving time.

1007: The terminal device sends the first reference signal, and correspondingly, the first DU and the second DU receive the first reference signal.

For example, the first reference signal may be the SRS. The terminal device may send the first reference signal on the time-frequency resource corresponding to the first reference signal. The first DU and the second DU separately receive the first reference signal on the time-frequency resource, and record time at which the first reference signal is received, to obtain the first receiving time and the second receiving time.

1008: The first DU sends a third message, and correspondingly, the CU receives the third message, where the third message includes the second receiving time.

1009: The second DU sends a fifth message, and correspondingly, the CU receives the fifth message, where the fifth message includes the first receiving time.

1010: The CU determines the first time difference based on the first receiving time and the second receiving time.

For example, the CU calculates a difference between the first receiving time and the second receiving time, to obtain the first time difference.

1011: The CU sends a second message, and correspondingly, the first DU receives the second message, where the second message includes the first time difference.

1012: The first DU determines first time information based on the first time difference.

It may be understood that, for specific descriptions of the first time information, refer to the foregoing related descriptions. Details are not described herein again.

1013: The first DU sends a first message, and correspondingly, the terminal device receives the first message, where the first message includes the first time information.

In this embodiment of this application, in a handover procedure triggered based on L3 signaling, the CU may directly include the first time difference in an L3 handover command, and send the first time difference to the terminal device via the L3 handover command. In other words, step 1001 and step 1011 to step 1013 may not need to be performed.

In this embodiment of this application, in a scenario in which the first network device and the second network device use a same CU, the first DU and the second DU exchange the reference signal configuration information and the receiving time of the first reference signal through the CU, so that the first DU can obtain the first time difference, and determine the first time information based on the first time difference, and the terminal device can determine a first TA value based on the first time information, to avoid service interruption caused by obtaining the first TA value in a random access process, and reduce interruption duration in a process in which the terminal device switches from the first DU to the second DU.

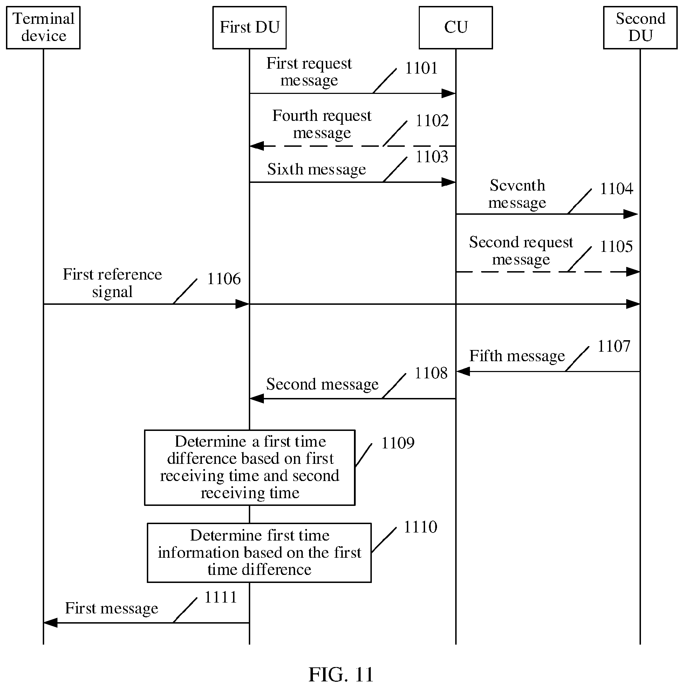

FIG. 11 is an interaction flowchart of still another communication method according to an embodiment of this application. The method shown in FIG. 11 may be applied to the communication system shown in FIG. 2B. Alternatively, the method may be applied to a terminal device, a first DU, a CU, and a second DU. The first DU and the second DU are deployed under the CU. The terminal device may be the first communication apparatus shown above, the first DU may be the second communication apparatus shown above, the CU may be the fourth communication apparatus shown above, and the second DU may be the third communication apparatus shown above. As shown in FIG. 11, the method includes but is not limited to the following steps.

1101: The first DU sends a first request message, and correspondingly, the CU receives the first request message, where the first request message is used to request a first time difference.

In a possible implementation, the method shown in FIG. 11 includes step 1102.

1102: The CU sends a fourth request message, and correspondingly, the first DU receives the fourth request message, where the fourth request message is used to request reference signal configuration information.

It may be understood that for specific descriptions of the reference signal configuration information, refer to the related descriptions of step 1002 shown in FIG. 10. Details are not described herein again.

1103: The first DU sends a sixth message, and correspondingly, the CU receives the sixth message, where the sixth message includes the reference signal configuration information.

1104: The CU sends a seventh message, and correspondingly, the second DU receives the seventh message, where the seventh message includes the reference signal configuration information.

In some possible implementations, the method shown in FIG. 11 may include step 1105. 1105: The CU sends a second request message, and correspondingly, the second DU receives the second request message, where the second request message is used to request first receiving time.

1106: The terminal device sends a first reference signal, and correspondingly, the first DU and the second DU receive the first reference signal.

1107: The second DU sends a fifth message, and correspondingly, the CU receives the fifth message, where the fifth message includes the first receiving time.

1108: The CU sends a second message, and correspondingly, the first DU receives the second message, where the second message includes the first receiving time.

1109: The first DU determines the first time difference based on the first receiving time and second receiving time.

For example, the first DU calculates a difference between the first receiving time and the second receiving time, to obtain the first time difference.

1110: The first DU determines first time information based on the first time difference.

1111: The first DU sends a first message, and correspondingly, the terminal device receives the first message, where the first message includes the first time information.

In this embodiment of this application, in a scenario in which the first network device and the second network device use a same CU, the first DU and the second DU exchange the reference signal configuration information and receiving time of the first reference signal through the CU, so that the first DU can determine the first time difference, and determine the first time information based on the first time difference, and the terminal device can determine a first TA value based on the first time information, to avoid service interruption caused by obtaining the first TA value in a random access process, and reduce interruption duration in a process in which the terminal device switches from the first DU to the second DU.

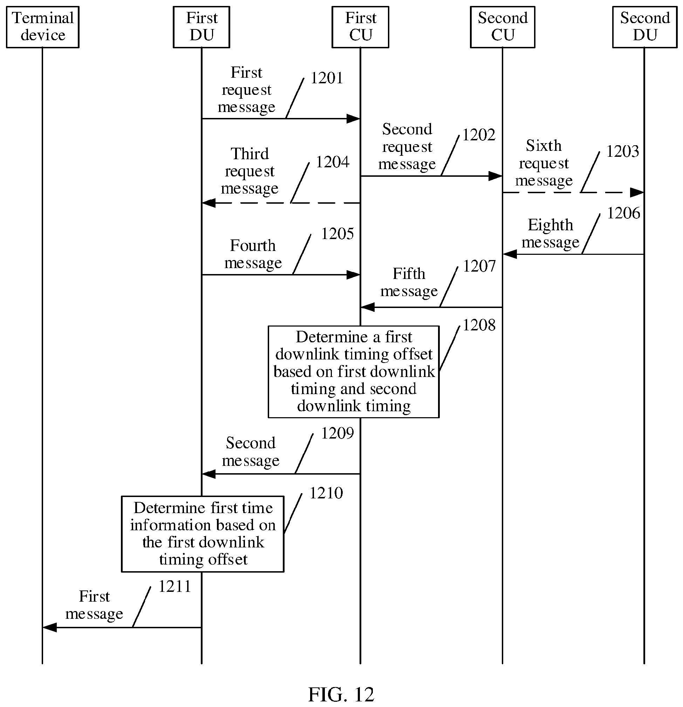

FIG. 12 is an interaction flowchart of still another communication method according to an embodiment of this application. The method shown in FIG. 12 may be applied to the communication system shown in FIG. 2B. Alternatively, the method may be applied to a terminal device, a first network device, and a second network device. The first network device includes a first DU and a first CU, and the second network device includes a second CU and a second DU. The terminal device may be the first communication apparatus shown above, the first DU may be the second communication apparatus shown above, the first CU may be the fourth communication apparatus shown above, and the second CU may be the third communication apparatus shown above. As shown in FIG. 12, the method includes but is not limited to the following steps.

1201: The first DU sends a first request message, and correspondingly, the first CU receives the first request message, where the first request message is used to request a first downlink timing offset.

1202: The first CU sends a second request message, and correspondingly, the second CU receives the second request message, where the second request message is used to request first downlink timing, and the first downlink timing is downlink timing of a second cell.

In some implementations, the method shown in FIG. 12 includes step 1203 and step 1204.

1203: The second CU sends a sixth request message, and correspondingly, the second DU receives the sixth request message, where the sixth request message is used to request the first downlink timing.

1204: The first CU sends a third request message, and correspondingly, the first DU receives the third request message, where the third request message is used to request second downlink timing.

1205: The first DU sends a fourth message, and correspondingly, the first CU receives the fourth message, where the fourth message includes the second downlink timing.

1206: The second DU sends an eighth message, and correspondingly, the second CU receives the eighth message, where the eighth message includes the first downlink timing.

1207: The second CU sends a fifth message, and correspondingly, the first CU receives the fifth message, where the fifth message includes the first downlink timing.

1208: The first CU determines the first downlink timing offset based on the first downlink timing and the second downlink timing.

1209: The first CU sends a second message, and correspondingly, the first DU receives the second message, where the second message includes the first downlink timing offset.

For example, the second message may further include a first value.

1210: The first DU determines first time information based on the first downlink timing offset.

1211: The first DU sends a first message, and correspondingly, the terminal device receives the first message, where the first message includes the first time information.

For example, the first message may further include the first value.

It may be understood that step 1201 and step 1202 may be performed before step 1203 to step 1206, or may be performed after step 1203 to step 1206. This is not limited in this application.

It may be understood that, in a handover procedure triggered based on L3 signaling, the first CU may directly include the first downlink timing offset in an L3 handover command, and send the first downlink timing offset to the terminal device via the L3 handover command. In other words, step 1201 and step 1209 to step 1211 may not be performed. Optionally, when the first network device and the second network device are in a CU-DU integrated architecture, step 1203, step 1204, step 1205, and step 1206 may not be performed. In other words, in the handover procedure triggered based on the L3 signaling, when the first network device and the second network device are in the CU-DU integrated architecture, the method in FIG. 12 may include step 1202, step 1207, and step 1208. The first network device may send the first downlink timing offset to the terminal device via the L3 handover command. For example, the L3 handover command may further include the first value.

In this embodiment of this application, in a scenario in which the first network device and the second network device use different CUs (or may be referred to as an inter-CU scenario), the first downlink timing offset may be obtained through interaction among the first DU, the first CU, the second CU, and the second DU, and the first time information is determined based on the first downlink timing offset, so that the first time information can indicate a first TA value, and the terminal device can determine the first TA value based on the first time information, to avoid service interruption caused by obtaining the first TA value in a random access process, and reduce interruption duration in a process in which the terminal device switches from the first DU to the second DU.

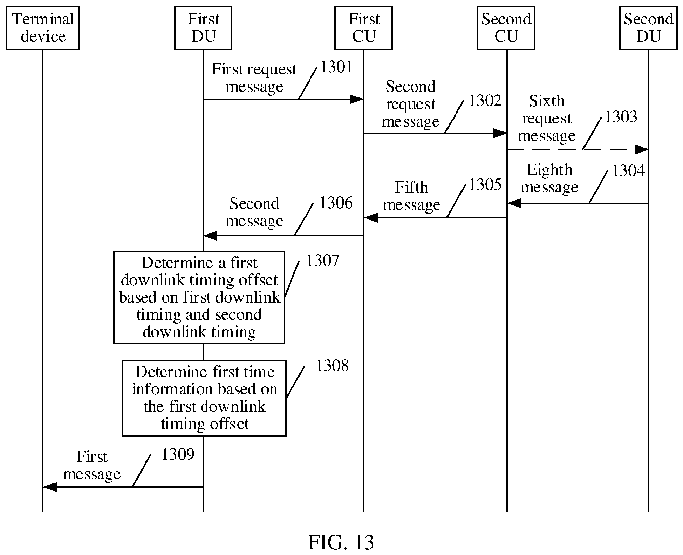

FIG. 13 is an interaction flowchart of still another communication method according to an embodiment of this application. The method shown in FIG. 13 may be applied to the communication system shown in FIG. 2B. Alternatively, the method may be applied to a terminal device, a first network device, and a second network device. The first network device includes a first DU and a first CU, and the second network device includes a second CU and a second DU. The terminal device may be the first communication apparatus shown above, the first DU may be the second communication apparatus shown above, the first CU may be the fourth communication apparatus shown above, and the second CU may be

be the third communication apparatus shown above. As shown in FIG. 13, the method includes but is not limited to the following steps.

1301: The first DU sends a first request message, and correspondingly, the first CU receives the first request message, where the first request message is used to request a first downlink timing offset.

1302: The first CU sends a second request message, and correspondingly, the second CU receives the second request message, where the second request message is used to request first downlink timing.

In some implementations, the method shown in FIG. 13 includes step 1303.

1303: The second CU sends a sixth request message, and correspondingly, the second DU receives the sixth request message, where the sixth request message is used to request the first downlink timing.

1304: The second DU sends an eighth message, and correspondingly, the second CU receives the eighth message, where the eighth message includes the first downlink timing.

1305: The second CU sends a fifth message, and correspondingly, the first CU receives the fifth message, where the fifth message includes the first downlink timing.

1306: The first CU sends a second message, and correspondingly, the first DU receives the second message, where the second message includes the first downlink timing.

1307: The first DU determines the first downlink timing offset based on the first downlink timing and second downlink timing.

1308: The first DU determines first time information based on the first downlink timing offset.

1309: The first DU sends a first message, and correspondingly, the terminal device receives the first message, where the first message includes the first time information.

It may be understood that step 1301 and step 1302 may be performed before step 1303 and step 1304, or may be performed after step 1303 and step 1304. This is not limited in this application.

In this embodiment of this application, in a scenario in which the first network device and the second network device use different CUs, the first DU may obtain downlink timing of a second cell through interaction among the first CU, the second CU, and the second DU, determine the first downlink timing offset based on downlink timing of a first cell and the downlink timing of the second cell, and determine the first time information based on the first downlink timing offset, so that the first time information can indicate a first TA value, and the terminal device can determine the first TA value based on the first time information, to avoid service interruption caused by obtaining the first TA value in a random access process, and reduce interruption duration in a process in which the terminal device switches from the first DU to the second DU.

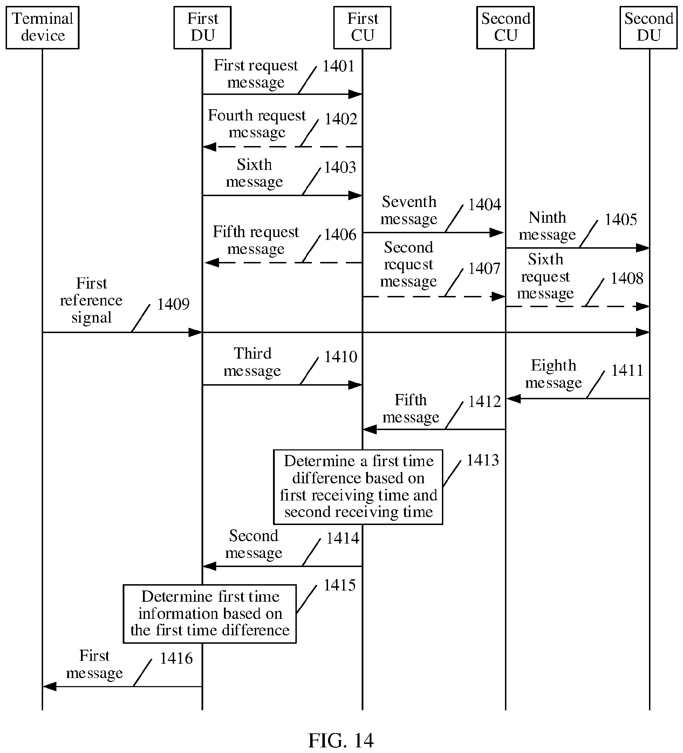

FIG. 14 is an interaction flowchart of still another communication method according to an embodiment of this application. The method shown in FIG. 14 may be applied to the communication system shown in FIG. 2B. Alternatively, the method may be applied to a terminal device, a first network device, and a second network device. The first network device includes a first DU and a first CU, and the second network device includes a second CU and a second DU. The terminal device may be the first communication apparatus shown above, the first DU may be the second communication apparatus shown above, the first CU may be the fourth communication apparatus shown above, and the second CU may be the third communication apparatus shown above. As shown in FIG. 14, the method includes but is not limited to the following steps.

1401: The first DU sends a first request message, and correspondingly, the first CU receives the first request message, where the first request message is used to request a first time difference.

In a possible implementation, the method shown in FIG. 14 includes step 1402.

1402: The first CU sends a fourth request message, and correspondingly, the first DU receives the fourth request message, where the fourth request message is used to request reference signal configuration information, and the reference signal configuration information is configuration information of a first reference signal sent by the terminal device.

1403: The first DU sends a sixth message, and correspondingly, the first CU receives the sixth message, where the sixth message includes the reference signal configuration information.

1404: The first CU sends a seventh message, and correspondingly, the second CU receives the seventh message, where the seventh message includes the reference signal configuration information.

1405: The second CU sends a ninth message, and correspondingly, the second DU receives the ninth message, where the ninth message includes the reference signal configuration information.

In some possible implementations, the method shown in FIG. 14 may include step 1406, step 1407, and step 1408.

1406: The first CU sends a fifth request message, and correspondingly, the first DU receives the fifth request message, where the fifth request message is used to request second receiving time.

1407: The first CU sends a second request message, and correspondingly, the second CU receives the second request message, where the second request message is used to request first receiving time.

1408: The second CU sends a sixth request message, and correspondingly, the second DU receives the sixth request message, where the sixth request message is used to request the first receiving time.

1409: The terminal device sends the first reference signal, and correspondingly, the first DU and the second DU receive the first reference signal.

1410: The first DU sends a third message, and correspondingly, the first CU receives the third message, where the third message includes the second receiving time.

1411: The second DU sends an eighth message, and correspondingly, the second CU receives the eighth message, where the eighth message includes the first receiving time.

1412: The second CU sends a fifth message, and correspondingly, the first CU receives the fifth message, where the fifth message includes the first receiving time.

1413: The first CU determines the first time difference based on the first receiving time and the second receiving time.

1414: The first CU sends a second message, and correspondingly, the first DU receives the second message, where the second message includes the first time difference.

1415: The first DU determines first time information based on the first time difference.

1416: The first DU sends a first message, and correspondingly, the terminal device receives the first message, where the first message includes the first time information.

For example, in a handover procedure triggered based on L3 signaling, the first CU may send the first time difference to the terminal device via an L3 handover command. In other words, step 1401 and step 1414 to step 1416 may not be performed in the method shown in FIG. 14. Optionally, when the first network device and the second network device are in a CU-DU integrated architecture, step 1402, step 1403, step 1405, step 1406, step 1408, step 1410, and step 1411 may not be performed in the method shown in FIG. 14. In other words, when the first network device and the second network device are in the CU-DU integrated architecture, in the handover procedure triggered based on the L3 signaling, the first network device and the second network device separately perform the actions performed by the first CU and the second CU in step 1404, step 1412, and step 1413. For example, the first network device may further send the first downlink timing offset to the terminal device via the L3 handover command.

In this embodiment of this application, in a scenario in which the first network device and the second network device use different CUs, the first DU and the second DU exchange the reference signal configuration information and receiving time of the first reference signal through the first CU and the second CU, so that the first DU can obtain the first time difference, and determine the first time information based on the first time difference, and the terminal device can determine a first TA value based on the first time information, to avoid service interruption caused by obtaining the first TA value in a random access process, and reduce interruption duration in a process in which the terminal device switches from the first DU to the second DU.

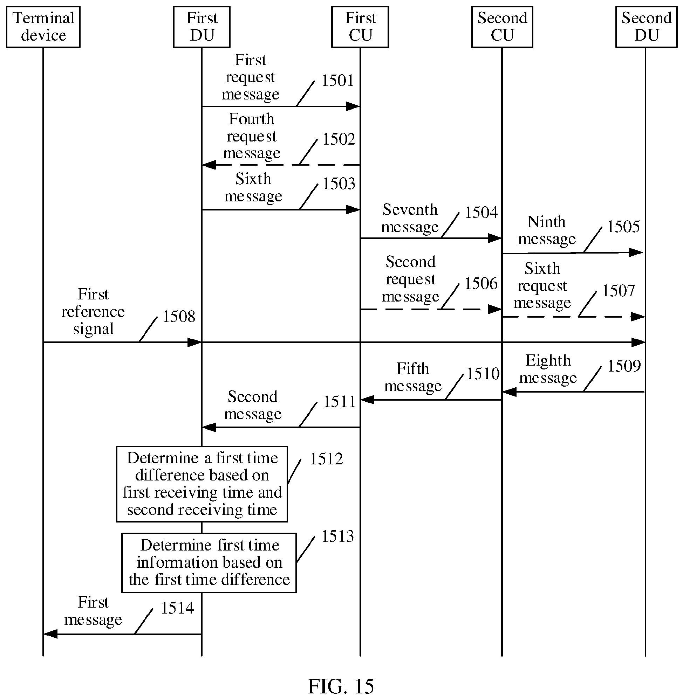

FIG. 15 is an interaction flowchart of still another communication method according to an embodiment of this application. The method shown in FIG. 15 may be applied to the communication system shown in FIG. 2B. Alternatively, the method may be applied to a terminal device, a first network device, and a second network device. The first network device includes a first DU and a first CU, and the second network device includes a second CU and a second DU. The terminal device may be the first communication apparatus shown above, the first DU may be the second communication apparatus shown above, the first CU may be the fourth communication apparatus shown above, and the second CU may be the third communication apparatus shown above. As shown in FIG. 15, the method includes but is not limited to the following steps.

1501: The first DU sends a first request message, and correspondingly, the first CU receives the first request message, where the first request message is used to request a first time difference.

In a possible implementation, the method shown in FIG. 15 includes step 1502.

1502: The first CU sends a fourth request message, and correspondingly, the first DU receives the fourth request message, where the fourth request message is used to request reference signal configuration information.

1503: The first DU sends a sixth message, and correspondingly, the first CU receives the sixth message, where the sixth message includes the reference signal configuration information.

1504: The first CU sends a seventh message, and correspondingly, the second CU receives the seventh message, where the seventh message includes the reference signal configuration information.

1505: The second CU sends a ninth message, and correspondingly, the second DU receives the ninth message, where the ninth message includes the reference signal configuration information.

In some possible implementations, the method shown in FIG. 15 includes step 1506 and step 1507.

1506: The first CU sends a second request message, and correspondingly, the second CU receives the second request message, where the second request message is used to request first receiving time.

1507: The second CU sends a sixth request message, and correspondingly, the second DU receives the sixth request message, where the sixth request message is used to request the first receiving time.

1508: The terminal device sends a first reference signal, and correspondingly, the first DU and the second DU receive the first reference signal.

1509: The second DU sends an eighth message, and correspondingly, the second CU receives the eighth message, where the eighth message includes the first receiving time.

1510: The second CU sends a fifth message, and correspondingly, the first CU receives the fifth message, where the fifth message includes the first receiving time.

1511: The first CU sends a second message, and correspondingly, the first DU receives the second message, where the second message includes the first receiving time.

1512: The first DU determines the first time difference based on the first receiving time and second receiving time.

1513: The first DU determines first time information based on the first time difference.

1514: The first DU sends a first message, and correspondingly, the terminal device receives the first message, where the first message includes the first time information.

In this embodiment of this application, in a scenario in which the first network device and the second network device use different CUs, the first DU and the second DU exchange the reference signal configuration information and receiving time of the first reference signal through the first CU and the second CU, so that the first DU can determine the first time difference, and determine the first time information based on the first time difference, and the terminal device can determine a first TA value based on the first time information, to avoid service interruption caused by obtaining the first TA value in a random access process, and reduce interruption duration in a process in which the terminal device switches from the first DU to the second DU.

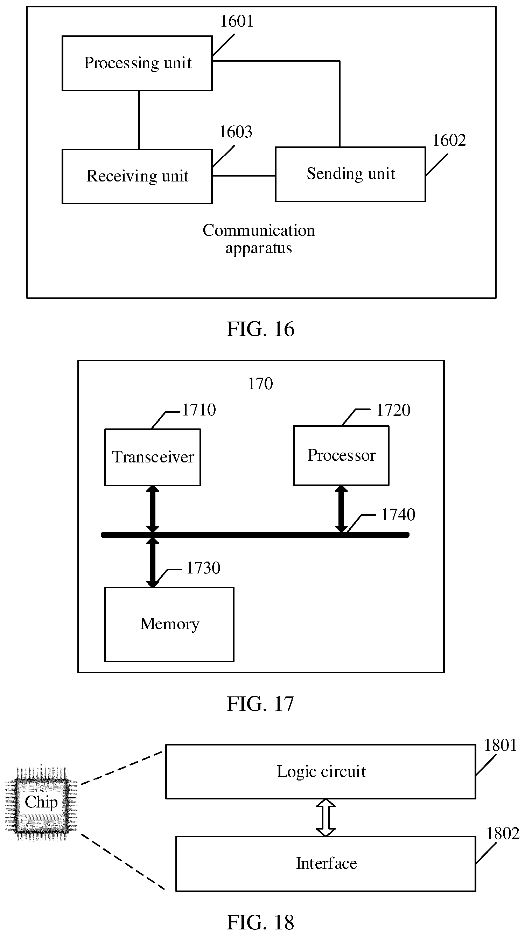

A communication apparatus provided in embodiments of this application is described below. In this application, the communication apparatus is divided into function modules based on the foregoing method embodiments. For example, each function module may be divided to each corresponding function, or two or more functions may be integrated into one processing module. The integrated module may be implemented in a form of hardware, or may be implemented in a form of a software function module. It should be noted that, in this application, module division is an example, and is merely a logical function division. In actual implementation, another division manner may be used. The following describes in detail communication apparatuses in embodiments of this application with reference to FIG. 16 to FIG. 18.

FIG. 16 is a diagram of a structure of a communication apparatus according to an embodiment of this application. As shown in FIG. 16, the communication apparatus includes a processing unit 1601, a sending unit 1602, and a receiving unit 1603.

In some embodiments of this application, the communication apparatus may be the first communication apparatus (or the terminal device) shown above. In other words, the communication apparatus shown in FIG. 16 may be configured to perform steps, functions, or the like performed by the first communication apparatus (or the terminal device) in the foregoing method embodiments. For example, the communication apparatus may be a beamformed transmit device, a chip, or the like. This is not limited in this embodiment of this application.

The receiving unit 1603 is configured to receive a first message.

The processing unit 1601 is configured to determine a first TA value.

The sending unit 1602 is configured to send uplink data.

Optionally, the processing unit 1601 is further configured to determine downlink frame timing of a second cell.

It may be understood that for specific descriptions of the first message, the first TA value, first time information, and the like, refer to the foregoing method embodiments, for example, the related descriptions of the methods shown in FIG. 5, FIG. 7, FIG. 8, FIG. 9, FIG. 10, FIG. 11, FIG. 12, FIG. 13, FIG. 14, and FIG. 15. Details are not described herein again.

It may be understood that specific descriptions of the processing unit, the sending unit, and the receiving unit shown in this embodiment of this application are merely examples. For specific functions of the processing unit, the sending unit, and the receiving unit, steps performed by the processing unit, the sending unit, and the receiving unit, or the like, refer to the foregoing method embodiments. Details are not described herein again.

FIG. 16 is reused. In some other embodiments of this application, the communication apparatus may be the second communication apparatus (or the first DU) shown above. In other words, the communication apparatus shown in FIG. 16 may be configured to perform steps, functions, or the like performed by the second communication apparatus (or the second DU) in the foregoing method embodiments. For example, the communication apparatus may be a beamformed receive device, a chip, or the like. This is not limited in this embodiment of this application.

The processing unit 1601 is configured to determine first time information.

The sending unit 1602 is configured to send a first message.

Optionally, the receiving unit 1603 is configured to receive a second message.

Optionally, the sending unit 1602 is further configured to send a fourth message.

Optionally, the receiving unit 1603 is further configured to receive a first reference signal.

Optionally, the sending unit 1602 is further configured to send a third message.

Optionally, the sending unit 1602 is further configured to send a first request message.

It may be understood that for specific descriptions of the first time information, the first message, the second message, the third message, the fourth message, the first request message, and the like, refer to the foregoing method embodiments, for example, the related descriptions of the methods shown in FIG. 5, FIG. 7, FIG. 8, FIG. 9, FIG. 10, FIG. 11, FIG. 12, FIG. 13, FIG. 14, and FIG. 15. Details are not described herein again.

It may be understood that specific descriptions of the receiving unit, the sending unit, and the processing unit shown in this embodiment of this application are merely examples. For specific functions of the receiving unit, the sending unit, and the processing unit, steps performed by the receiving unit, the sending unit, and the processing unit, or the like, refer to the foregoing method embodiments. Details are not described herein again.

FIG. 15 is reused. In some other embodiments of this application, the communication apparatus may be the fourth communication apparatus (or the CU or the first CU) shown above. In other words, the communication apparatus shown in FIG. 15 may be configured to perform steps, functions, or the like performed by the fourth communication apparatus (or the CU or the first CU) in the foregoing method embodiments. For example, the communication apparatus may be a beamformed receive device, a chip, or the like. This is not limited in this embodiment of this application.

The receiving unit 1603 is configured to receive a fifth message.

The sending unit 1602 is further configured to send a second message.

Optionally, the receiving unit 1603 is further configured to receive a third message; and the processing unit 1601 is configured to determine a first time difference.

Optionally, the receiving unit 1603 is further configured to receive a fourth message; and the processing unit 1601 is configured to determine a first downlink timing offset.

Optionally, the receiving unit 1603 is further configured to receive a first request message. Optionally, the sending unit 1602 is further configured to send a second request message.

It may be understood that for specific descriptions of the second message, the third message, the fourth message, the fifth message, the first time difference, and the first downlink timing offset, refer to the foregoing method embodiments, for example, the related descriptions of the methods shown in FIG. 5, FIG. 7, FIG. 8, FIG. 9, FIG. 10, FIG. 11, FIG. 12, FIG. 13, FIG. 14, and FIG. 15. Details are not described herein again.

It may be understood that specific descriptions of the receiving unit, the sending unit, and the processing unit shown in this embodiment of this application are merely examples. For specific functions of the receiving unit, the sending unit, and the processing unit, steps performed by the receiving unit, the sending unit, and the processing unit, or the like, refer to the foregoing method embodiments. Details are not described herein again.

FIG. 15 is reused. In some other embodiments of this application, the communication apparatus may be the third communication apparatus (or the second DU or the second CU) shown above. In other words, the communication apparatus shown in FIG. 16 may be configured to perform steps, functions, or the like performed by the third communication apparatus (or the second DU or the second CU) in the foregoing method embodiments. For example, the communication apparatus may be a beamformed receive device, a chip, or the like. This is not limited in this embodiment of this application.

The receiving unit 1603 is configured to receive a second request message.

The sending unit 1602 is configured to send a fifth message.

Optionally, the receiving unit 1603 is further configured to receive a first reference signal.

It may be understood that for specific descriptions of the second request message, the fifth message, and the first reference signal, refer to the foregoing method embodiments, for example, the related descriptions of the methods shown in FIG. 5, FIG. 7, FIG. 8, FIG. 9, FIG. 10, FIG. 11, FIG. 12, FIG. 13, FIG. 14, and FIG. 15. Details are not described herein again.

It may be understood that specific descriptions of the receiving unit, the sending unit, and the processing unit shown in this embodiment of this application are merely examples. For specific functions of the receiving unit, the sending unit, and the processing unit, steps performed by the receiving unit, the sending unit, and the processing unit, or the like, refer to the foregoing method embodiments. Details are not described herein again.

The foregoing describes the first communication apparatus, the second communication apparatus, the third communication apparatus, and the fourth communication apparatus in embodiments of this application. The following describes possible product forms of the first communication apparatus, the second communication apparatus, the third communication apparatus, and the fourth communication apparatus. It should be understood that any form of product having a function of the first communication apparatus in FIG. 16, any form of product having a function of the second communication apparatus in FIG. 16, any form of product having a function of the third communication apparatus in FIG. 16, or any form of product having a function of the fourth communication apparatus in FIG. 16 shall fall within the protection scope of embodiments of this application. It should be further understood that the following descriptions are merely an example, and does not limit product forms of the first communication apparatus, the second communication apparatus, the third communication apparatus, and the fourth communication apparatus in embodiments of this application.

In the communication apparatus shown in FIG. 16, the processing unit 1601 may be one or more processors, the sending unit 1602 may be a transmitter, the receiving unit 1603 may be a receiver, and the sending unit and the receiving unit are integrated into one component, for example, a transceiver. Alternatively, the processing unit 1601 may be one or more processors (or the processing unit 1601 may be one or more logic circuits), the sending unit 1602 may be an output interface, the receiving unit 1603 may be an input interface, and the input interface and the output interface may be integrated into one unit, for example, an input/output interface. Details are described below.

In a possible implementation, in the communication apparatus shown in FIG. 16, the processing unit 1601 may be one or more processors, and the sending unit 1602 and the receiving unit 1603 are integrated into one component, for example, a transceiver. In this embodiment of this application, the processor and the transceiver may be coupled, or the like. A connection manner between the processor and the transceiver is not limited in this embodiment of this application.

As shown in FIG. 17, the communication apparatus 170 includes one or more processors 1720 and a transceiver 1710.

For example, when the communication apparatus is configured to perform the steps, the methods, or the functions performed by the first communication apparatus, the transceiver 1710 is configured to receive a first message and send uplink data; and the processor 1720 is configured to determine a first TA value. Optionally, the processor 1720 is further configured to determine downlink frame timing of a second cell.

For example, when the communication apparatus is configured to perform the steps, the methods, or the functions performed by the second communication apparatus, the processor 1720 is configured to determine first time information; and the transceiver 1710 is configured to send a first message. Optionally, the transceiver 1710 is further configured to receive a second message. Optionally, the transceiver 1710 is further configured to send a fourth message. Optionally, the transceiver 1710 is further configured to receive a first reference signal. Optionally, the transceiver 1710 is further configured to send a third message. Optionally, the transceiver 1710 is further configured to send a first request message.

For example, when the communication apparatus is configured to perform the steps, the methods, or the functions performed by the fourth communication apparatus, the transceiver 1710 is configured to receive a fifth message and send a second message. Optionally, the transceiver 1710 is further configured to receive a third message; and the processor 1720 is configured to determine a first time difference. Optionally, the transceiver 1710 is further configured to receive a fourth message, and the processor 1720 is configured to determine a first downlink timing offset and the like.

For example, when the communication apparatus is configured to perform the steps, the methods, or the functions performed by the third communication apparatus, the transceiver 1710 is configured to receive a second request message and send a fifth message. Optionally, the transceiver 1710 is further configured to receive a first reference signal.

It may be understood that for specific descriptions of the first time information, the first message, the second message, the third message, the fourth message, the fifth message, the first request message, the second request message, the first reference signal, and the like, refer to the foregoing method embodiments, for example, the related descriptions of the methods shown in FIG. 5, FIG. 7, FIG. 8, FIG. 9, FIG. 10, FIG. 11, FIG. 12, FIG. 13, FIG. 14, and FIG. 15. Details are not described herein again.

It may be understood that for specific descriptions of the processor and the transceiver, refer to the descriptions of the processing unit, the sending unit, and the receiving unit shown in FIG. 16. Details are not described herein again.

In various implementations of the communication apparatus shown in FIG. 16, the transceiver may include a receiver and a transmitter, the receiver is configured to perform a receiving function (or operation), and the transmitter is configured to perform a transmitting function (or operation). The transceiver is configured to communicate with another device/apparatus through a transmission medium.

Optionally, the communication apparatus 170 may further include one or more memories 1730, configured to store program instructions and/or data. The memory 1730 is coupled to the processor 1720. The coupling in this embodiment of this application may be an indirect coupling or a communication connection between apparatuses, units, or modules in an electrical form, a mechanical form, or another form, and is used for information exchange between the apparatuses, the units, or the modules. The processor 1720 may cooperate with the memory 1730. The processor 1720 may execute the program instructions stored in the memory 1730. Optionally, at least one of the one or more memories may be included in the processor.

A specific connection medium between the transceiver 1710, the processor 1720, and the memory 1730 is not limited in this embodiment of this application. In this embodiment of this application, the memory 1730, the processor 1720, and the transceiver 1710 are connected through a bus 1740 in FIG. 17. The bus is denoted by using a bold line in FIG. 17. A manner of connection between other components is merely an example for description, and cannot be construed as a limitation. The bus may be classified into an address bus, a data bus, a control bus, and the like. For ease of representation, only one thick line is used to represent the bus in FIG. 17, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

The processor 1720 is mainly configured to: process a communication protocol and communication data, control an entire communication apparatus, execute a software program, and process data of the software program. The memory 1730 is mainly configured to store the software program and the data. The transceiver 1710 may include a control circuit and an antenna. The control circuit is mainly configured to perform a conversion between a baseband signal and a radio frequency signal, and process the radio frequency signal. The antenna is mainly configured to receive or send a radio frequency signal in a form of an electromagnetic wave. An input/output apparatus, such as a touchscreen, a display, or a keyboard, is mainly configured to receive data input by a user and output data to the user.

After the communication apparatus is powered on, the processor 1720 may read the software program in the memory 1730, interpret and execute instructions of the software program, and process data of the software program. When the data needs to be sent wirelessly, the processor 1720 performs baseband processing on the to-be-sent data, and outputs a baseband signal to a radio frequency circuit. The radio frequency circuit performs radio frequency processing on the baseband signal, and then sends out the radio frequency signal through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1720. The processor 1720 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

It may be understood that the communication apparatus shown in this embodiment of this application may alternatively include more components than those shown in FIG. 17, or the like. This is not limited in this embodiment of this application. The methods performed by the processor and the transceiver are merely examples. For specific steps performed by the processor and the transceiver, refer to the methods described above.

In another possible implementation, in the communication apparatus shown in FIG. 16, the processing unit 1601 may be one or more logic circuits, the sending unit 1602 may be an output interface, the receiving unit 1603 may be an input interface, and the input interface and the output interface may be integrated into one unit, for example, an input/output interface. The input/output interface is also referred to as a communication interface, an interface circuit, an interface, or the like. As shown in FIG. 18, a communication apparatus shown in FIG. 18 includes a logic circuit 1801 and an interface 1802. In other words, the processing unit 1601 may be implemented by using the logic circuit 1801, and the sending unit 1602 and the receiving unit 1603 may be implemented by using the interface 1802. The logic circuit 1801 may be a chip, a processing circuit, an integrated circuit, a system on chip (system on chip, SoC), or the like. The interface 1802 may be a communication interface, an input/output interface, a pin, or the like. For example, in FIG. 18, the foregoing communication apparatus is shown by using a chip as an example, and the chip includes the logic circuit 1801 and the interface 1802.

In this embodiment of this application, the logic circuit and the interface may be coupled to each other. A specific manner of connection between the logic circuit and the interface is not limited in this embodiment of this application.

For example, when the communication apparatus is configured to perform the methods, the functions, or the steps performed by the first communication apparatus, the interface 1802 is configured to input a first message and output uplink data; and the logic circuit 1801 is configured to determine a first TA value. Optionally, the processor 1720 is further configured to determine downlink frame timing of a second cell.

For example, when the communication apparatus is configured to perform the methods, the functions, or the steps performed by the second communication apparatus, the logic circuit 1801 is configured to determine first time information; and the interface 1802 is configured to output a first message. Optionally, the interface 1802 is further configured to input a second message. Optionally, the interface 1802 is further configured to output a fourth message. Optionally, the interface 1802 is further configured to input a first reference signal. Optionally, the interface 1802 is further configured to output a third message. Optionally, the interface 1802 is further configured to output a first request message.

For example, when the communication apparatus is configured to perform the steps, the methods, or the functions performed by the fourth communication apparatus, the interface 1802 is configured to input a fifth message and output a second message. Optionally, the interface 1802 is further configured to input a third message; and the logic circuit 1801 is configured to determine a first time difference. Optionally, the interface 1802 is further configured to input a fourth message, and the logic circuit 1801 is configured to determine a first downlink timing offset.

It may be understood that the communication apparatus shown in embodiments of this application may implement the methods provided in embodiments of this application in a form of hardware, or may implement the methods provided in embodiments of this application in a form of software. This is not limited in embodiments of this application.

It may be understood that for specific descriptions of the first time information, the first message, the second message, the third message, the fourth message, the fifth message, the first request message, the second request message, the first reference signal, and the like, refer to the foregoing method embodiments, for example, the related descriptions of the methods shown in FIG. 5, FIG. 7, FIG. 8, FIG. 9, FIG. 10, FIG. 11, FIG. 12, FIG. 13, FIG. 14, and FIG. 15. Details are not described herein again.

For specific implementations of embodiments shown in FIG. 18, refer to the foregoing embodiments. Details are not described herein.

An embodiment of this application further provides a communication system. The communication system includes at least one of the following: a first communication apparatus, a second communication apparatus, a third communication apparatus, and a fourth communication apparatus. The first communication apparatus, the second communication apparatus, the third communication apparatus, and the fourth communication apparatus may be configured to perform the method in any one of the foregoing embodiments (as shown in FIG. 5, FIG. 7, FIG. 8, FIG. 9, FIG. 10, FIG. 11, FIG. 12, FIG. 13, FIG. 14, and FIG. 15).

In addition, this application further provides a computer program. The computer program is used to implement operations and/or processing performed by the first communication apparatus in the methods provided in this application.

This application further provides a computer program. The computer program is used to implement operations and/or processing performed by the second communication apparatus in the methods provided in this application.

This application further provides a computer program. The computer program is configured to implement operations and/or processing performed by the third communication apparatus in the method provided in this application.

This application further provides a computer program. The computer program is configured to implement operations and/or processing performed by the fourth communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the methods provided in this application.

This application further provides a computer-readable storage medium. The computer-readable storage medium stores computer code. When the computer code is run on a computer, the computer is enabled to perform operations and/or processing performed by the second communication apparatus in the methods provided in this application.

This application further provides a computer-readable storage medium. The computer-readable storage medium stores computer code. When the computer code is run on a computer, the computer is enabled to perform operations and/or processing performed by the third communication apparatus in the methods provided in this application.

This application further provides a computer-readable storage medium. The computer-readable storage medium stores computer code. When the computer code is run on a computer, the computer is enabled to perform operations and/or processing performed by the fourth communication apparatus in the methods provided in this application.

This application further provides a computer program product. The computer program product includes computer code or a computer program. When the computer code or the computer program is run on a computer, operations and/or processing performed by the first communication apparatus in the methods provided in this application are/is performed.

This application further provides a computer program product. The computer program product includes computer code or a computer program. When the computer code or the computer program is run on a computer, operations and/or processing performed by the second communication apparatus in the methods provided in this application are/is performed.

This application further provides a computer program product. The computer program product includes computer code or a computer program. When the computer code or the computer program is run on a computer, operations and/or processing performed by the third communication apparatus in the methods provided in this application are/is performed.

This application further provides a computer program product. The computer program product includes computer code or a computer program. When the computer code or the computer program is run on a computer, operations and/or processing performed by the fourth communication apparatus in the methods provided in this application are/is performed.

An embodiment of this application further provides a chip or a chip system, including a processor, configured to perform the method in any one of the foregoing embodiments (as shown in FIG. 5, FIG. 7, FIG. 8, FIG. 9, FIG. 10, FIG. 11, FIG. 12, FIG. 13, FIG. 14, and FIG. 15).

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method is applied to a first communication apparatus and comprises:

   receiving a first message from a second communication apparatus, wherein the first message comprises first time information, the first time information is determined based on a first transmission delay and a second transmission delay, the first transmission delay is a transmission delay from the first communication apparatus to the second communication apparatus, the second transmission delay is a transmission delay from the first communication apparatus to a third communication apparatus, the second communication apparatus is a communication apparatus corresponding to a first cell, and the third communication apparatus is a communication apparatus corresponding to a second cell;
   determining a first timing advance TA value of the second cell based on the first time information; and
   sending uplink data to the third communication apparatus based on the first TA value.

2. The method according to claim 1, wherein the first time information indicates the first TA value, the first TA value is determined based on a second TA value and a first time difference, the second TA value is a TA value of the first cell or a TA value of a first timing advance group TAG of the first communication apparatus, and the first time difference is a difference between the first transmission delay and the second transmission delay.

3. The method according to claim 1, wherein the determining a first timing advance TA value of the first cell based on the first time information comprises:
   determining the first TA value based on the first time information and a second TA value, wherein the second TA value is a TA value of the first cell or a TA value of a first TAG of the first communication apparatus.

4. The method according to claim 3, wherein the first message further comprises first indication information, and the first indication information indicates the first TAG.

5. The method according to claim 3 or 4, wherein the first time information comprises a first time difference, the first time difference is a difference between the first transmission delay and the second transmission delay, and the determining the first TA value based on the first time information and a second TA value comprises:
determining the first TA value based on the first time difference and the second TA value.

6. The method according to claim 5, wherein the first time information further comprises a first downlink timing offset, the first downlink timing offset is a downlink timing offset between the first cell and the second cell, and the determining the first TA value based on the first time difference and the second TA value comprises:
determining the first TA value based on the first time difference, the second TA value, and the first downlink timing offset.

7. The method according to claim 6, wherein the first TA value satisfies: TA1=TA2-2*(UL_TDOA-$\triangle$), wherein TA1 is the first TA value, TA2 is the second TA value, UL_TDOA is the first time difference, and $\triangle$ is the first downlink timing offset.

8. The method according to claims 5 to 7, wherein the method further comprises:
determining downlink frame timing of the second cell based on the first time difference and the first downlink frame timing, wherein the first downlink frame timing is downlink frame timing of the first cell or downlink frame timing of the first TAG.

9. The method according to claim 8, wherein the downlink frame timing of the second cell is obtained by adjusting the first downlink frame timing forward or backward by the first time difference.

10. The method according to claim 3 or 4, wherein the first time information comprises a second time difference, the second time difference is a difference between a round-trip transmission delay from the first communication apparatus to the second communication apparatus and a round-trip transmission delay from the first communication apparatus to the third communication apparatus, and the determining the first TA value based on the first time information and a second TA value comprises:
determining the first TA value based on the second time difference and the second TA value.

11. The method according to claim 10, wherein the second time difference is determined based on a first time difference and a first downlink timing offset, the first time difference is a difference between the first transmission delay and the second transmission delay, and the first downlink timing offset is a downlink timing offset between the first cell and the second cell.

12. The method according to claim 10 or 11, wherein the first TA value satisfies: TA1=TA2-TA_offset, wherein TA1 is the first TA value, TA2 is the second TA value, and TA_offset is the second time difference.

13. A communication method, wherein the method is applied to a second communication apparatus and comprises:

   determining first time information, wherein the first time information is determined based on a first transmission delay and a second transmission delay, the first transmission delay is a transmission delay from a first communication apparatus to the second communication apparatus, the second transmission delay is a transmission delay from the first communication apparatus to a third communication apparatus, the second communication apparatus is a communication apparatus corresponding to a first cell, and the third communication apparatus is a communication apparatus corresponding to a second cell; and
   sending a first message to the first communication apparatus, wherein the first message comprises the first time information.

14. The method according to claim 13, wherein the first time information indicates a first TA value, the first TA value is determined based on a second TA value and a first time difference, the first TA value is a TA value of the second cell, the second TA value is a TA value of the first cell or a TA value of a first timing advance group TAG of the first communication apparatus, and the first time difference is a difference between the first transmission delay and the second transmission delay.

15. The method according to claim 13, wherein the first time information comprises a first time difference, and the first time difference is a difference between the first transmission delay and the second transmission delay.

16. The method according to claim 15, wherein the first time information further comprises a first downlink timing offset, and the first downlink timing offset is a downlink timing offset between the first cell and the second cell.

17. The method according to claim 13, wherein the first time information comprises a second time difference, the second time difference is a difference between a round-trip transmission delay from the first communication apparatus to the second communication apparatus and a round-trip transmission delay from the first communication apparatus to the third communication apparatus, the second time difference is determined based on a first time difference, and the first time difference is a difference between the first transmission delay and the second transmission delay.

18. The method according to claim 17, wherein the second time difference is determined based on the first time difference and a first downlink timing offset, and the first downlink timing offset is a downlink timing offset between the first cell and the second cell.

19. The method according to any one of claims 13 to 18, wherein the method further comprises:

receiving a second message from a fourth communication apparatus, wherein the second message indicates the first time information; and
the determining first time information comprises:
determining the first time information based on the second message.

20. The method according to claim 19, wherein the second message comprises the first downlink timing offset, and the determining the first time information based on the second message comprises:
determining the first time information based on the first downlink timing offset.

21. The method according to claim 20, wherein the method further comprises:
sending a fourth message to the fourth communication apparatus, wherein the fourth message comprises second downlink timing, and the second downlink timing is downlink timing of the first cell.

22. The method according to claim 19, wherein the second message comprises first downlink timing, the first downlink timing is downlink timing of the second cell, and the method further comprises:

determining the first downlink timing offset based on the first downlink timing and second downlink timing, wherein the second downlink timing is downlink timing of the first cell; and
the determining the first time information based on the second message comprises:
determining the first time information based on the first downlink timing offset.

23. The method according to claim 22, wherein the first downlink timing comprises time corresponding to a radio frame, time corresponding to a subframe, or time corresponding to a slot.

24. The method according to claim 19, wherein the second message comprises the first time difference, and the determining the first time information based on the second message comprises:
determining the first time information based on the first time difference.

25. The method according to claim 24, wherein the method further comprises:

receiving a first reference signal from the first communication apparatus; and
sending a third message to the fourth communication apparatus, wherein the third message comprises the second receiving time, and the second receiving time is time at which the second communication apparatus receives the first reference signal.

26. The method according to claim 19, wherein the second message comprises first receiving time, the first receiving time is time at which a first reference signal of the first communication apparatus is transmitted to the third communication apparatus, and the method further comprises:

determining the first time difference based on the first receiving time and second receiving time, wherein the second receiving time is time at which the second communication apparatus receives the first reference signal; and
the determining the first time information based on the second message comprises:
determining the first time information based on the first time difference.

27. The method according to any one of claims 19 to 26, wherein the method further comprises:

sending a first request message to the fourth communication apparatus, wherein the first request message is used to request to obtain the second message.

28. A communication method, wherein the method is applied to a fourth communication apparatus and comprises:

receiving a fifth message from a third communication apparatus, wherein the fifth message comprises first receiving time or first downlink timing, the first receiving time is time at which a first reference signal of a first communication apparatus is transmitted to the third communication apparatus, the first downlink timing is downlink timing of a second cell, and the third communication apparatus is a communication apparatus corresponding to the second cell; and
sending a second message to a second communication apparatus based on the first receiving time or the first downlink timing, wherein the second message indicates first time information, the first time information is determined based on a first transmission delay and a second transmission delay, the first transmission delay is a transmission delay from the first communication apparatus to the second communication apparatus, the second transmission delay is a transmission delay from the first communication apparatus to the third communication apparatus, and the second communication apparatus is a communication apparatus corresponding to a first cell.

29. The method according to claim 28, wherein the fifth message comprises the first receiving time, the second message comprises a first time difference, the first time difference is a difference between the first transmission delay and the second transmission delay, and the method further comprises:

receiving a third message from the second communication apparatus, wherein the third message comprises second receiving time, and the second receiving time is time at which the first reference signal is transmitted to the second communication apparatus; and
determining the first time difference based on the first receiving time and the second receiving time.

30. The method according to claim 28, wherein the fifth message comprises the first downlink timing, the second message comprises a first downlink timing offset, the first downlink timing offset is a downlink timing offset between the first cell and the second cell, and the method further comprises:

receiving a fourth message from the second communication apparatus, wherein the fourth message comprises second downlink timing, and the second downlink timing is downlink timing of the first cell; and
determining the first downlink timing offset based on the first downlink timing and the second downlink timing.

31. The method according to claim 28, wherein the second message comprises the first receiving time or the first downlink timing.

32. The method according to any one of claims 28 to 31, wherein the method further comprises:
receiving a first request message from the second communication apparatus, wherein the first request message is used to request to obtain the second message.

33. The method according to any one of claims 28 to 32, wherein the method further comprises:
sending a second request message to the third communication apparatus, wherein the second request message is used to request to obtain the first receiving time or the first downlink timing.

34. A communication method, wherein the method is applied to a third communication apparatus and comprises:

receiving a second request message from a fourth communication apparatus, wherein the second request message is used to request first receiving time or first downlink timing, the first receiving time is time at which a first reference signal of a first communication apparatus is transmitted to the third communication apparatus, the first downlink timing is downlink timing of a second cell, and the third communication apparatus is a communication apparatus corresponding to the second cell; and
sending a fifth message to the fourth communication apparatus, wherein the fifth message comprises the first receiving time or the first downlink timing.

35. The method according to claim 34, wherein the method further comprises:
receiving the first reference signal.

36. A communication apparatus, comprising a unit configured to perform the method according to any one of claims 1 to 12, comprising a unit configured to perform the method according to any one of claims 13 to 27, comprising a unit configured to perform the method according to any one of claims 28 to 33, or comprising a unit configured to perform the method according to any one of claims 34 and 35.

37. A communication apparatus, comprising a processor and a memory, wherein

   the memory is configured to store computer-executable instructions; and
   the processor is configured to execute the computer-executable instructions, so that the method according to any one of claims 1 to 12 is performed; the method according to any one of claims 13 to 27 is performed; the method according to any one of claims 28 to 33 is performed; or the method according to any one of claims 34 and 35 is performed.

38. A computer-readable storage medium, wherein the computer-readable storage medium is configured to store a computer program, and when the computer program is executed, the method according to any one of claims 1 to 12 is performed; the method according to any one of claims 13 to 27 is performed; the method according to any one of claims 28 to 33 is performed; or the method according to any one of claims 34 and 35 is performed.

39. A communication system, comprising at least two of the following: a first communication apparatus, a second communication apparatus, a third communication apparatus, and a fourth communication apparatus, wherein the first communication apparatus is configured to perform the method according to any one of claims 1 to 12, the second communication apparatus is configured to perform the method according to any one of claims 13 to 27, the third communication apparatus is configured to perform the method according to any one of claims 34 and 35, and the fourth communication apparatus is configured to perform the method according to any one of claims 28 to 33.

40. A computer program product, wherein the computer program product comprises a computer program, and when the computer program is run on a computer, the method according to any one of claims 1 to 12 is performed; the method according to any one of claims 13 to 27 is performed; the method according to any one of claims 28 to 33 is performed; or the method according to any one of claims 34 and 35 is performed.

FIG. 1

FIG. 2A

FIG. 2B

FIG. 3

Terminal device

Second network device

Random access preamble — 401

RAR message — 402

Msg3 — 403

Msg4 — 404

**FIG. 4**

Third communication apparatus

First communication apparatus

Second communication apparatus

Determine first time information — 501

First message — 502

Determine a first TA value of a second cell based on the first time information — 503

Uplink data — 504

**FIG. 5**

Downlink timing
of a first cell

Downlink timing
of a second cell

Timing of a first
communication
apparatus

First TA value

Second TA value

FIG. 6

| First communication apparatus | Second communication apparatus | Fourth communication apparatus | Third communication apparatus |
|---|---|---|---|

First request message ╱ 701

Second request message ╱ 702

Fifth message ╱ 703

Second message ╱ 704

Determine first time information based on the second message ╱ 705

First message ╱ 706

FIG. 7

FIG. 8

| Terminal device | First DU | CU | Second DU |
|---|---|---|---|

First request message / 901 →

Second request message / 902 →

Fifth message / 903 ←

Second message / 904 ←

Determine a first downlink timing offset based on first downlink timing and second downlink timing / 905

Determine first time information based on the first downlink timing offset / 906

First message / 907 ←

FIG. 9

FIG. 10

FIG. 11

| Terminal device | First DU | First CU | Second CU | Second DU |
|---|---|---|---|---|

First request message / 1201 →

Second request message / 1202 →

Sixth request message / 1203 →

Third request message / 1204 ←

Eighth message / 1206 ←

Fourth message / 1205 →

Fifth message / 1207 ←

Determine a first downlink timing offset based on first downlink timing and second downlink timing / 1208

Second message / 1209 ←

Determine first time information based on the first downlink timing offset / 1210

First message / 1211 ←

FIG. 12

| Terminal device | First DU | First CU | Second CU | Second DU |
|---|---|---|---|---|

First request message / 1301

Second request message / 1302

Sixth request message / 1303

Eighth message 1304

Fifth message / 1305

Second message / 1306

Determine a first downlink timing offset based on first downlink timing and second downlink timing / 1307

Determine first time information based on the first downlink timing offset / 1308

First message / 1309

FIG. 13

FIG. 14

| Terminal device | First DU | First CU | Second CU | Second DU |
|---|---|---|---|---|

First request message / 1501

Fourth request message / 1502

Sixth message / 1503

Seventh message / 1504

Ninth message / 1505

Second request message / 1506

Sixth request message / 1507

First reference signal / 1508

Eighth message / 1509

Fifth message / 1510

Second message / 1511

Determine a first time difference based on first receiving time and second receiving time / 1512

Determine first time information based on the first time difference / 1513

First message / 1514

FIG. 15

FIG. 16

FIG. 17

FIG. 18

## INTERNATIONAL SEARCH REPORT

| International application No. |
| --- |
| **PCT/CN2023/117087** |

| A. | CLASSIFICATION OF SUBJECT MATTER |
| --- | --- |
| | H04W36/00(2009.01)i |

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; CNABS; CNKI; VEN; WOTXT; USTXT; EPTXT: 范强, 黄宗浩, 酉春华, 顾志方, 胡小群, 华为, 定时提前, 时间, 差, 偏移, 切换, 基站, 网络设备, 小区, 无, 非, 免, 随机接入, TA, timing advance, difference, offset, switch, base station, BS, NB, eNB, source, target, random access

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113498619 A (QUALCOMM INC.) 12 October 2021 (2021-10-12) description, paragraphs [0016]-[0037] and [0079]-[0122], and figure 6 | 1-40 |
| X | US 2020351728 A1 (INSTITUTE FOR INFORMATION INDUSTRY) 05 November 2020 (2020-11-05) description, paragraphs [0029]-[0081] | 1-40 |
| X | CN 114070376 A (HUAWEI TECHNOLOGIES CO., LTD.) 18 February 2022 (2022-02-18) description, paragraphs [0056]-[0119] | 1-40 |
| A | CN 110167131 A (HUAWEI TECHNOLOGIES CO., LTD.) 23 August 2019 (2019-08-23) entire document | 1-40 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 November 2023** | **18 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/117087** |

| Patent document cited in search report | | | Publication date (day/month/year) | Patent family member(s) | | | Publication date (day/month/year) |
| --- | --- | --- | --- | --- | --- | --- | --- |
| CN | 113498619 | A | 12 October 2021 | US | 2022014982 | A1 | 13 January 2022 |
| | | | | US | 11622303 | B2 | 04 April 2023 |
| | | | | US | 2020267609 | A1 | 20 August 2020 |
| | | | | US | 11082898 | B2 | 03 August 2021 |
| | | | | EP | 3928565 | A1 | 29 December 2021 |
| | | | | WO | 2020172277 | A1 | 27 August 2020 |
| US | 2020351728 | A1 | 05 November 2020 | TW | 202137797 | A | 01 October 2021 |
| | | | | TWI | 747354 | B | 21 November 2021 |
| | | | | US | 11503515 | B2 | 15 November 2022 |
| CN | 114070376 | A | 18 February 2022 | WO | 2022022601 | A1 | 03 February 2022 |
| CN | 110167131 | A | 23 August 2019 | US | 2020374871 | A1 | 26 November 2020 |
| | | | | US | 11265871 | B2 | 01 March 2022 |
| | | | | EP | 3735039 | A1 | 04 November 2020 |
| | | | | EP | 3735039 | A4 | 10 March 2021 |
| | | | | WO | 2019157980 | A1 | 22 August 2019 |

Form PCT/ISA/210 (patent family annex) (July 2022)

**REFERENCES CITED IN THE DESCRIPTION**

**Patent documents cited in the description**

• CN 202211163296X